(19) Europäisches Patentamt
European Patent Office
Office européen des brevets

(11) EP 0 511 487 B1

(12) EUROPEAN PATENT SPECIFICATION

(45) Date of publication and mention of the grant of the patent:
**29.05.1996 Bulletin 1996/22**

(51) Int Cl.[6]: **C09K 19/54**, G02F 1/1333, C09K 19/12, C09K 19/30, C09K 19/34

(21) Application number: **92104893.0**

(22) Date of filing: **20.03.1992**

# (54) Electro-optical liquid crystal system

Elektrooptisches Flüssigkristallsystem

Dispositif électrooptique à cristaux liquide

(84) Designated Contracting States:
**DE GB**

(30) Priority: **04.04.1991 EP 91105367**

(43) Date of publication of application:
**04.11.1992 Bulletin 1992/45**

(60) Divisional application: **95116379.9**

(73) Proprietor: **MERCK PATENT GmbH**
**D-64271 Darmstadt (DE)**

(72) Inventors:
- **Coates, David, Dr.**
  **Wimborne, Dorset BH21 3SW (GB)**
- **Brown, Emma Jane**
  **Bournemouth BH6 5JX (GB)**
- **Finkenzeller, Ulrich, Dr.**
  **W-6831 Plankstadt (DE)**
- **Reiffenrath, Volker**
  **W-6101 Rossdorf (DE)**
- **Hittich, Reinhard, Dr.**
  **W-6101 Modautal 1 (DE)**
- **Plach, Herbert, Dr.**
  **W-6100 Darmstadt (DE)**

(56) References cited:
**WO-A-90/15115**
**WO-A-91/03445**
**WO-A-91/03447**
**WO-A-91/03450**
**WO-A-91/05029**
**WO-A-93/13850**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The invention relates to an electrooptical liquid crystal system

- which contains a dielectrically positive liquid crystal mixture and a further optically transparent medium between 2 electrodes which are optionally applied to substrate sheets,
- whose liquid crystal molecules in the switched-off state have an irregular orientation,
- in which one of the refractive indices of the liquid crystal mixture essentially agrees with the refractive index of the matrix $n_M$ and/or in which the quotient of the mass of the liquid crystal mixture and of the mass of the optically transparent medium is 1.5 or more and
- which, independently of the polarization of the incident light, has a reduced transmission in one of the two switch states compared to the other state,

and liquid crystal mixtures used in this system.

Depending on the mass content of the liquid crystal mixture in the system, this can be embedded in the optically transparent medium in liquid crystal microdroplets which are separated to a greater or lesser extent from one another or else form a more or less coherent, continuous phase in which the optically transparent medium is present, for example, in the form of particles. A continuous phase is also obtained, for example, if the optically transparent medium forms a sponge-like, 3-dimensional network whose pores, in which the liquid crystal is located, merge into each other to a greater or lesser extent. The expression liquid crystal microdroplets here indicates small liquid crystal compartments separated from one another which, however, in no way have to have a spherical shape, but can be irregularly shaped and/or deformed.

If the optically transparent medium contains liquid crystal microdroplets, it is described in the following as a matrix; on the other hand, if a more or less continuous phase of the liquid crystal is present, the medium is described by the expression network.

NCAP and PDLC films (NCAP = nematic curvilinear aligned phases, PDLC = polymer dispersed liquid crystal) are examples of electrooptical liquid crystal systems in which the liquid crystal is embedded in the matrix in the form of microdroplets. NCAP films are usually obtained by intimately mixing the encapsulated polymeric material, such as, for example, polyvinyl alcohol, the liquid crystal mixture and a carrier material, such as, for example, water, in a colloid mill. The carrier material is then removed, for example by drying. An appropriate process is described in US 4,435,047. In contrast, the liquid crystal mixture is first homogeneously mixed with monomers or oligomers of the matrix-forming material in the preparation of PDLC films described, for example, in US 4,688,900, Mol. Cryst. Liq. Cryst. Nonlin. Optic, 157, (1988), 427-441, WO 89/06264 and EP 0,272,585. The mixture is then polymerized and the phase separation is induced (so-called PIPS technology; polymerization-induced phase separation). In addition, differentiation must further be made between TIPS (temperature-induced phase separation) and SIPS (solvent-induced phase separation) (Mol. Cryst. Liq. Cryst. Inc. Nonlin. Opt. 157 (1988) 427).

The PN system (PN = Polymer Network) described in EP 0,313,053 has a sponge-like network structure of the optically transparent medium. The content of the liquid crystal mixture in the material of the light-modulating layer is in general greater than 60% in systems of this type and is, in particular, between 70 and 90%. In order to prepare the PM systems, a mixture of the liquid crystal, monomers or oligomers of the material forming the 3-dimensional network and a polymerization initiator, in particular a photoinitiator, is customarily brought between 2 substrate plates provided with electrodes and then polymerized, for example by light irradiation.

The liquid crystal in general has a positive dielectric anisotropy $\Delta\varepsilon$ and a relatively high optical anisotropy. In microdroplets matrix systems, one of the refractive indices of the liquid crystal, customarily the ordinary refractive index $n_0$ is selected in such a way that it more or less coincides with the refractive index $n_M$ of the polymeric matrix. In the case of network systems, an adjustment of the refractive indices owing to the customarily very much higher liquid crystal content in the light-modulating layer is not absolutely necessary, but can be carried out to increase the light transmission and the contrast. An electrically switchable light scattering effect is observed in these electro-optical liquid crystal systems.

If no voltage is applied to the electrodes, between which the matrix or the network is customarily arranged like a sandwich, light incident on the statistically aligned liquid crystal molecules is strongly scattered and the system is non-transparent. On applying a voltage, the liquid crystal molecules are aligned parallel to the field and perpendicular to the E vector of the transmitted light.

In the case of microdroplets matrix systems, perpendicularly incident light sees an optically isotropic medium when voltage is applied owing to the adjustment of $n_0$ and $n_M$ and the system appears transparent. An adjustment is necessary in order to avoid a scattering of the light at the matrix/liquid crystal droplets phase boundary. EP 0,272,585 describes another embodiment in which the refractive index $n_x$, which the liquid crystal exhibits at completely statistical orientation, is adjusted to the refractive index of the matrix $n_M$. In this case, the system is transparent in the field-free state, and it

is converted into the opaque state by applying a voltage.

In the case of network systems, an adjustment of the refractive indices is not absolutely necessary, as owing to the high liquid crystal content in the material of the light-modulating layer, the scattering at the network/liquid crystal phase boundary is obviously less strong. In the switched-on state, the system appears transparent even without adjustment of the refractive indices. In the case of network systems, the use of liquid crystals having high optical anisotropy is preferred to achieve a transmission which is as low as possible in the non-connected state.

In WO 89/09807, the use of an optically anisotropic, for example liquid crystalline polymeric matrix material has been proposed in order to avoid the frequently observed clouding ("haze", in particular "off-axis haze") in the transparent state of the system. In systems of this type, the refractive indices of liquid crystal and optically anisotropic matrix can be adapted to each other so that the transparent state is obtained either with the voltage applied or switched off.

Electrooptical liquid crystal systems according to the preamble of Claim 1 have been especially proposed for large-surface-area indicating systems, for architectural applications (windows, room dividers, sunroofs etc.) and for motor vehicles (windows, sunroofs etc.), these systems also being suitable for temperature regulation by virtue of controlled screening of the solar radiation. They can be switched on by applying a direct or alternating voltage.

As these systems are, in particular, also intended for "outdoor" applications, liquid crystal mixtures are required which are characterized by a high clear point, high $\Delta\varepsilon$, a broad nematic range, a favourable temperature dependence of the electrooptical parameters and a high stability to UV and temperature.

Examples of other applications are:

- GH-indicating systems, the spectrum extending from simple segment displays to displays, to which it is possible to apply any desired electrode pattern using conventional printing techniques. Applications: motor vehicle, large displays, advertizing boards, clocks
- displays having a high information content controlled by active or passive matrix
- projection systems
- switches.

Here too, liquid crystal mixtures having, in particular, high $\Delta\varepsilon$, high electrical resistance, favourable values of the electrooptical parameters and their temperature dependence, advantageous values of viscosity and a high stability to UV and temperature are required.

In microdroplets matrix systems, until now LC mixtures were customarily employed which consist of alkyl- or alkoxycyanobiphenyls and -terphenyls. Thus, for example, US 4,688,900 and EP 0,272,585 describe the use of liquid crystal mixture E8 (prepared by BDH, Poole, Great Britain). This liquid crystal mixture is distinguished by a high value for the optical anisotropy $\Delta n$ of 0.247 and a relatively high value for the flow viscosity $\eta$ (20°C) of 54 $mm^2/s$, but at the same time has a relatively low clear point of only 72°C. If polynuclear polyphenyl compounds are added to the mixture to increase the clear point, a higher value for the flow viscosity $\eta$ and an unchanged high or higher value for the optical anisotropy $\Delta n$ results. High $\Delta n$ values admittedly provide on the one hand for a strong light scattering in the opaque state, but on the other hand they can cause a clouding of the system in the switched-on state ("haze", in particular "off-axis haze") and thus an impairment of the electrooptical properties. Indeed, in systems which are controlled by a relatively low frequency alternating voltage, a high flow viscosity $\eta$ is desired in order to obtain a flicker-free display; however, on the other hand in matrix displays having a high information content liquid crystal mixtures having a relatively low viscosity are required for the realization of rapid switching times.

The liquid crystal mixture E7 (prepared by BDH, Poole, Great Britain) used in US 4,671,618, which also consists of alkyl- and alkoxycyanobiphenyls and -terphenyls, admittedly has a relatively low flow viscosity with $\eta$ = 39 $mm^2/s$ and a somewhat smaller optical anisotropy $\Delta n$ than E8 with $\Delta n$ = 0.225, but at the same time the clear point $T_c$ = 60.5°C is considerably lower. The dielectric anisotropy of the mixture E7 $\Delta\varepsilon$ is 13.8 and is thus somewhat smaller than that of E8 with $\Delta\varepsilon$ = 15.6. In order to obtain threshold voltages which are as small as possible, still higher values for $\Delta\varepsilon$ are advantageous.

In EP 0,313,053, liquid crystal mixtures for network systems are proposed which are based on 2-(4-cyanophenyl) pyridines. Liquid crystal mixtures of this type indeed have relatively high values for the dielectric anisotropy $\Delta\varepsilon$ and thus relatively small threshold voltages and high to very high values for the optical anisotropy $\Delta n$. At the same time, however, these liquid crystals are characterized by a relatively high viscosity $\eta$, a relatively low clear point $T_c$ and a working temperature range which is insufficient for many applications. Moreover, cyanophenylpyridine compounds have, inter alia, a lower stability to UV and temperature than cyano-oligophenyl compounds.

The liquid crystals used hitherto only inadequately fulfil the requirements for a broad nematic range, a high clear point, a very high thermal and UV stability, an absence of smectic phases down to low temperatures, an optical anisotropy $\Delta n$ and flow viscosity $\eta$ which are optimizable with respect to the respective application and a high $\Delta\varepsilon$.

In addition, the previous liquid crystals frequently have too low a miscibility with the monomers and/or oligomers of the polymer used for the formation of the matrix or of the network, which considerably impairs the preparation of PN

systems and, in the case of microdroplets matrix systems considerably restricts, in particular, the use of PIPS technology. Moreover, the liquid crystals are frequently characterized by too high a solubility in the matrix- or network-forming polymer. A further disadvantage of the previous liquid crystals is frequently that the liquid crystal exhibits unfavourable values of the the electrooptical parameters such as, for example, the slope of the electrooptical curve and/or the temperature dependence of the electrooptical parameters such as, for example, the threshold voltage, for the respective application.

A great need thus still exists for electrooptical liquid crystal systems which are better suited to the appropriate requirements and do not have the disadvantages described or only have them to a relatively small extent.

The invention was thus based on the aim of making available electrooptical liquid crystal systems and liquid crystals which do not have the disadvantages mentioned of conventional systems or only have them to a relatively small extent. Other aims of the present invention are immediately evident to the person skilled in the art from the following detailed description.

It has been found that the aims on which the invention is based can be achieved if liquid crystal mixtures are used for the systems, which mixtures contain one or more compounds of the formula I

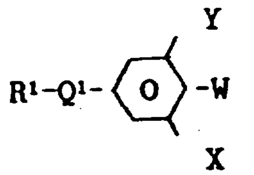

I

in which

$Q^1$ is

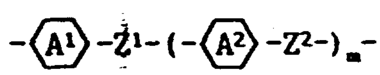

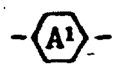 and 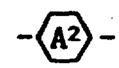

are independently of one another trans-1,4-cyclohexylene, 1,4-phenylene, 2-fluoro-1,4-phenylene, 3-fluoro-1,4-phenylene, 3,5-difluoro-1,4-phenylene and one of $A^1$ and, if present, $A^2$, is also pyridine-2,5-diyl, pyrimidine-2,5-diyl, 1,3-dioxane-2,5-diyl, tetrahydropyran-2,5-diyl or naphthalene-2,6-diyl.

$Z^1$ and $Z^2$ are independently of one another a single bond, $-CH_2CH_2-$ . -COO-, -OCO-, -C≡C-, $-CH_2O-$ or any desired combinations of these bridge groups,

Y and X are independently of one another H or F, and one of X and Y is also Cl,

W is -CN, -Cl, -F, $-CF_3$, $-OCF_3$ or -NCS

$R^1$ is alkyl having 1-12 C atoms, in which one or 2 non-adjacent $CH_2$ groups can also be replaced by -O- or -HC=CH-, and

m is 0, 1 or 2,

with the proviso that at least one of X and Y is F and/or at least one of $A^1$ and $A^2$ is 2-fluoro-, 3-fluoro- or 3,5-difluoro-1,4-phenylene.

The invention thus relates to an electrooptical liquid crystal system

- which contains a dielectrically positive liquid crystal mixture and a further optically transparent medium between 2 electrodes which are optionally applied to substrate sheets,
- whose liquid crystal molecules in the switched-off state have an irregular orientation,
- in which one of the refractive indices of the liquid crystal mixture essentially agrees with the refractive index of the optically isotropic transparent $n_M$ medium or in which the refractive- indices of the liquid crystal mixture essentially agree with the refractive indices of the optically anisotropic transparent medium and/or in which the quotient of the mass of the liquid crystal mixture and of the mass of the optically transparent medium is 1.5 or more,
- which, independently of the polarization of the incident light, has a reduced transmission in one of the two switch states compared to the other state, and

- whose liquid crystal contains one or more compounds of the formula I.

The construction of the electrooptical liquid crystal systems according to the invention corresponds to the customary mode of construction for systems of this type. The term customary mode of construction is in this case broadly interpreted and includes all adaptations and modifications.

Thus, for example, in the case of PDLC or NCAP films, the matrix formed by the transparent medium in which the liquid crystal mixture is microdispersed or microencapsulated is arranged between conducting electrodes like a sandwich.

The electrodes are applied, inter alia, to substrate sheets of, for example, glass, plastic or the like; if desired, however, the matrix can also be provided directly with electrodes so that the use of substrates can be avoided.

In the case of network systems, the liquid crystal is located in the pores of the sponge-like, 3-dimensional network or the optically transparent medium is located in the form of small, for example spherical, particles in the liquid crystal. The network is customarily arranged between substrates provided with electrodes in order to prevent escape of the liquid crystal.

Both network systems and microdroplets matrix systems can be operated reflectively or transmissively so that at least one electrode and, if present, the associated substrate are transparent. Both systems customarily contain no polarizers, as a result of which a distinctly higher light transmission results. Furthermore, no orientation layers are necessary, which is a considerable technological simplification in the production of these systems compared with conventional liquid crystal systems such as, for example, TN or STN cells.

The matrix or the 3-dimensional network are based, in particular, on isotropic thermoplastics, thermoset plastics and elastomers. Depending on the intended application, the systems obtained can be flexible, elastic or rigid.

A system based on a thermoplastic polymer can easily be deformed by the action of a mechanical stress at temperatures which are greater than the glass temperature of the matrix. This can be used, for example, in microdroplets matrix systems in order to freeze a specifically deformed shape of the droplets by cooling the matrix to temperatures below the glass temperature. Furthermore, for example, the matrix can be mechanically stretched at temperatures above the glass temperature or orientated by the action of electrical or magnetic fields, this orientation, which is maintained at temperatures below the glass temperature, causing optically anisotropic properties of the matrix.

While flexible and/or elastic systems are preferably based on thermoplastics and/or elastomers, thermoset polymers are preferably used for the production of rigid systems. These can be deformed mechanically, for example, during hardening, the shape and arrangement of the microdroplets, for example, being fixed in the hardened matrix.

In the literature, there are various details about materials particularly suitable for the production of the matrix or of the network. Thus, for example, in US 4,435,047 or in Liquid Crystals, 3, (1988) 1543, water-soluble polymers are proposed, such as, for example, polyvinyl alcohol PVA or latex-like emulsions. In US 4,671,618, US 4,673,255, US 4,688,900, WO 85/04262 and in Mol. Cryst. Liq. Cryst. Inc. Nonlin. Opt. 157 (1988) 427, on the other hand synthetic resins such as, for example, epoxy resins and polyurethanes which, for example, are thermally cured, are mentioned as suitable matrix materials. EP 0,272,585 describes matrix or network materials based on photocurable vinyl compounds and WO 89/06264 proposes copolymers of multifunctional acrylates containing multifunctional mercaptans. Other details about polymers which are suitable, in particular, for matrix systems are found, for example, in EP 0,165,063, EP 0,345,029, EP 0,357,234 or EP 0,205,261.

For the production of network systems, a number of 3-dimensional crosslinkable monomers such as, for example, di- and triacrylates are mentioned in EP 0,313,053.

In addition, however, other transparent materials such as, for example, inorganic oxide glass monoliths (US 4,814,211), other inorganic materials (see, for example, Japanese Laid-Open Specification 303325/1988) or, alternatively, other materials can also be used for matrix and network systems.

The materials mentioned are intended to illustrate the invention only by way of example, but should in no case limit it. In principle, all transparent materials can be used which permit the production of the matrix or network structures described according to the preamble of Claim 1.

Preferred embodiments of the electrooptical liquid crystal systems according to the invention are NCAP films, PDLC films and microdroplets matrix systems produced by modified processes. Processes for the production of these films are described, for example, in US 4,688,900, US 4,673,255, US 4,671,618, WO 85/0426, US 4,435,047, EP 0,272,595, Mol. Cryst. Liq. Cryst. Inc. Nonlin. Opt. 157 (1988) 427, Liquid Crystals, 3 (1988) 1543, EP 0,165,063, EP 0,345,029, EP 0,357,234 and EP 0,205,261.

A further preferred embodiment of the electrooptical systems according to the invention are the network systems whose production is described in EP 0,313,053. Included in the network systems here are also arrangements in which the transparent medium is dispersed in the form of individual, for example spherical, particles in the liquid crystal, such as is described, for example, in GB 1,442,360.

However, in addition also those embodiments of the invention are included in which the transparent medium has a structure which lies between the network structure on the one side and the microdroplets matrix configuration on the

other side.

In addition, other embodiments of the invention not explicitly mentioned here are also included.

The thickness d of the electrooptical systems d is customarily chosen to be small in order to achieve a threshold voltage $V_{th}$ which is as low as possible. Thus, for example, layer thicknesses of 0.8 and 1.6 mm are reported in US 4,435,047, while values for the layer thickness between 10 µm and 300 µm are given in US 4,688,900 and between 5 µm and 30 µm in EP 0,313,053. The electrooptical systems according to the invention only have layer thicknesses d which are distinctly greater than a few mm in exceptional cases; layer thicknesses d ≤ 2 mm are preferred.

The threshold voltage is also influenced by the size of the microdroplets or the mesh width of the network. Generally, relatively small microdroplets cause a relatively high threshold voltage $V_{th}$, but relatively short switch times $t_{on}$ or $t_{off}$ (US 4,673,255). Experimental methods for influencing the average droplet size are described, for example, in US 4,673,255 and in J.L. West, Mol. Cryst. Liq. Cryst. Inc. Nonlin. Opt., 157 (1988) 427. In US 4,673,255, average drop diameters between 0.1 µm and 8 µm are given, while, for example, a matrix which is based on a glass monolith has pores having a diameter between 15 and 2,000 Å. For the mesh width of the network of the PN systems, a preferred range between 0.5 and 2 µm is given in EP 0,313,053.

An essential difference between the electrooptical liquid crystal systems according to the invention and those customary hitherto exists, however, in the liquid crystal mixture used.

The liquid crystal mixtures according to the invention contain at least one compound of the formula I.

The compounds of the formula I include 2-, 3- and 4-ring dielectrically positive or dielectrically neutral compounds of the sub-formulae I2, I3 and I4:

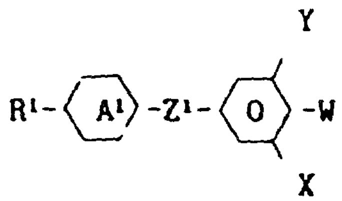

I2

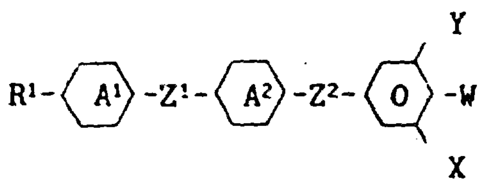

I3

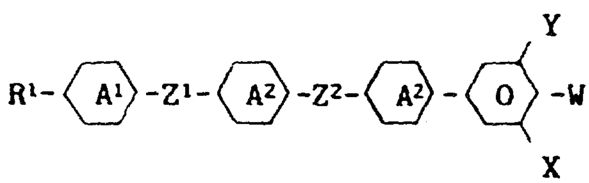

I4

In the compounds of the formula I2-I4, X and Y independently of one another are H, F or Cl, but in particular H or F. Preferably, the compounds of the formulae I3 and I4 contain not more than 2 and, in particular, not more than 1 heterocycle. In the compounds of the formula I4, one of the bridges $Z^1$ and $Z^2$ is preferably a single bond.

In the compounds of the formula I and the sub-formulae of the compounds I2-I4, $R^1$ and $R^2$, if present, are independently of one another alkyl having 1-12 C atoms, in which one or 2 non-adjacent $CH_2$ groups can also be replaced by -O- or -CH=CH-.

If $R^1$ and/or, if present, $R^2$ is an alkyl radical and/or an alkoxy radical, this can be straight-chain or branched. Preferably it is straight-chain, has 1, 2, 3, 4, 5, 6 or 7 C atoms and is therefore preferably methyl, ethyl, propyl, butyl, pentyl, hexyl, heptyl, methoxy, ethoxy, propoxy, butoxy, pentoxy, hexoxy or heptoxy, or further octyl, nonyl, decyl, undecyl, dodecyl, octoxy, nonoxy, decoxy, undecoxy or dodecoxy.

Oxaalkyl is preferably straight-chain 2-oxapropyl (= methoxymethyl, 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

If $R^1$ and/or, if present, $R^2$ are an alkyl radical in which a $CH_2$ group is replaced by -CH=CH-, this can be straight-chain or branched. Preferably it is straight-chain and has 2 to 10 C atoms. It is therefore particularly vinyl, prop-1- or prop-2-enyl, but-1-, 2- or but-3-enyl, pent-1-, 2-, 3- or pent-4-enyl, hex-1-, 2-, 3-, 4- or hex-5-enyl, hept-1-, 2-, 3-, 4-, 5- or hept-6-enyl, oct-1-, 2-, 3-, 4-, 5-, 6- or oct-7-enyl, non-1-, 2-, 3-, 4-, 5-, 6-, 7- or non-8-enyl, dec-1-, 2-, 3-, 4-, 5-, 6-, 7-, 8- or dec-9-enyl.

In the compounds of the formula I, the radicals $R^1$ and/or, if present, $R^2$ can be straight-chain or branched; however, they are preferably straight-chain. Compounds of the formula I having branched alkyl or alkoxy radicals can occasionally

be of importance owing to a better solubility in the customary liquid crystalline base materials, but in particular as chiral dopants if they are optically active. Electrooptical systems according to the preamble of Claim 1, whose liquid crystal contains one or more chiral components, are described in DE 39 11 255.1.

Branched groups of this type as a rule contain not more than one chain branching. Preferred branched radicals are isopropyl, 2-butyl (= 1-methylpropyl), isobutyl (= 2-methylpropyl), 2-methylbutyl, isopentyl (= 3-methylbutyl), 2-methylpentyl, 3-methylpentyl, 2-ethylhexyl, 2-propylpentyl, 2-octyl, isopropoxy, 2-methylpropoxy, 2-methylbutoxy, 3-methylbutoxy, 2-methylpentoxy, 3-methylpentoxy, 2-ethylhexoxy, 2-methylhexoxy, 2-octyloxy, 2-oxa-3-methylbutyl, 3-oxa-4-methylpentyl, 4-methylhexyl, 2-nonyl, 6-methyloctoxy, 2-methyl-3-oxapentyl and 2-methyl- 3-oxahexyl.

The compounds of the formula I are prepared by methods known per se, such as are described in the literature (for example in the standard works such as Houben-Weyl, Methoden der Organischen Chemie (Methods of Organic Chemistry), Georg-Thieme-Verlag, Stuttgart Vol. IX, p. 867 et seq.), in particular under reaction conditions which are known and suitable for the reactions mentioned. In this connection, use can also be made of variants known per se which are not mentioned here in more detail.

Particularly preferred are the following small groups of compounds of the sub-formula Ia to I d:

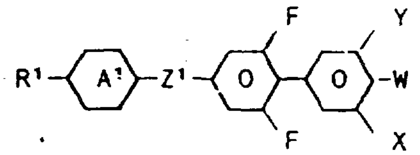

I a

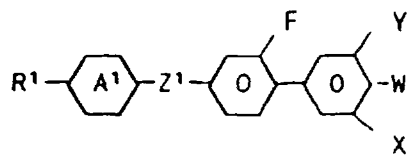

I b

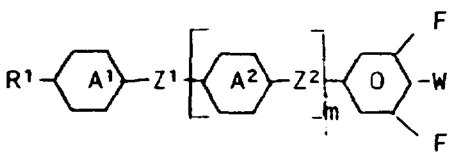

I c

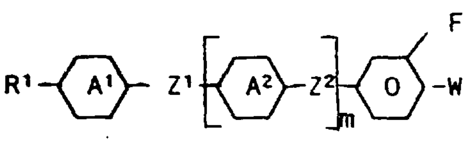

I d

W is preferably F, clor -NCS. Cl is particularly preferred.

For the sake of simplicity, in the following Cyc is trans-1,4-cyclohexylene, Phe is 1,4-phenylene, Phe.2F is 2-fluoro-1,4-phenylene, Phe.3F is 3-fluoro-1,4-phenylene, Phe.F2 is 2,3-difluoro-1,4-phenylene, Phe.3F5F is 3,5-difluoro-1,4-phenylene, Phe.F is 2- or 3-difluoro-1,4-phenylene, Pyr is pyrimidine-2,5-diyl, Pyd is pyridine-2,5-diyl, Dio is 1,3-dioxane-2,5-diyl and Thp is tetrahydropyran-2,5-diyl. The acronyms Pyr, Pyd, Dio and Thp in each case include the two possible positional isomers; the meaning of the acronyms Phe.2Cl, Phe.3Cl, Phe.3Cl5Cl and Phe.Cl is evident from that of the appropriate fluorinated 1,4-phenylene groups.

Liquid crystal compounds are particularly preferred which, in addition to compounds of the sub-formulae Ia to Id are based on compounds of the formulae II-IV.

$$T\text{-}W^1\text{-Phe-CN} \qquad II$$

$$R\text{-}W^1\text{-Cyc-CN} \qquad III$$

$$T\text{-V-Phe-CN} \qquad IV$$

in which

| | |
|---|---|
| R | in each case independently of one another is an alkyl group having 1-15 C atoms, in which one or two non-adjacent $CH_2$ groups can also be replaced by -O-, -CO- and/or -CH=CH-, |
| $W^1$ | is Phe.(F)-$Y^1$ or Cyc-$Y^1$, |
| $Y^1$ | is a single bond, -COO- or -OCO- |
| V | is pyridine-1,5-diyl or pyrimidine-2,5-diyl, |
| T | is R, R-Phe.(F)-$Y^1$ or R-Cyc-$Y^1$ and |
| Phe.(F) | is 1,4-phenylene, 2-fluoro-1,4-phenylene or 3-fluoro-1,4-phenylene. |

In the compounds of the formulae II-IV, the terminal group Phe-CN can also be mono- or difluorinated in 3-and/or 5-position by F, in particular if $Y^1$ is -COO- or -OCO-.

The content of the component mixture consisting of one or more compounds selected from the group of compounds of the sub-formulae Ia and in particular of the sub-formulae Ia2-1 - Ia2-6 and Ia3-1 - Ia3-16, and one or more compounds selected from the group of compounds of the formulae II-IV in the liquid crystal mixtures used in the electrooptical liquid crystal systems according to the invention is preferably 15%-100%, but in particular 25%-100%. The component mixtures, in addition to one or more compounds of the sub-formula Ia and in particular of the sub-formulae Ia2-1 - Ia2-6 and Ia3-1 - Ia3-16, particularly preferably contain one or more compounds which are selected from the following smaller group of compounds II1-II25, III1-III3 and IV1-IV8:

| | |
|---|---|
| R-Cyc-Phe-CN | II1 |
| R-Cyc-COO-Phe-CN | II2 |
| R-Cyc-COO-Phe.3F-CN | II3 |
| R-Cyc-COO-Phe.3F5F-CN | II4 |
| R-Phe-Phe-CN | II5 |
| R-Phe-COO-Phe-CN | II6 |
| R-Phe-COO-Phe.3F-CN | II7 |
| R-Phe-COO-Phe.3F5F-CN | II8 |
| R-Cyc-Phe-Phe-CN | II9 |
| R-Cyc-COO-Phe-Phe-CN | II10 |
| R-Cyc-Phe-COO-Phe-CN | II11 |
| R-Cyc-COO-Phe-Phe.3F-CN | II12 |
| R-Cyc-COO-Phe-Phe.3F5F-CN | II13 |
| R-Cyc-Phe-COO-Phe.3F-CN | II14 |
| R-Cyc-Phe-COO-Phe.3F5F-CN | II15 |
| R-Phe-Phe-Phe-CN | II16 |
| R-Phe-Phe.3F-Phe-CN | II17 |
| R-Phe-COO-Phe-Phe-CN | II19 |
| R-Phe-COO-Phe-Phe.3F-CN | II20 |
| R-Phe-COO-Phe-Phe.3F5F-CN | II21 |
| R-Phe-Phe-COO-Phe-CN | II22 |
| R-Phe-Phe-COO-Phe.3F-CN | II23 |
| R-Phe-Phe-COO-Phe.3F5F-CN | II24 |
| R-Cyc-Cyc-CN | III1 |
| R-Cyc-COO-Cyc-CN | III2 |
| R-Cyc-OCO-Cyc-CN | III3 |
| R-Pyd-Phe-CN | IV1 |
| R-Pyr-Phe-CN | IV2 |
| R-Pyd-Phe-Phe-CN | IV3 |
| R-Pyr-Phe-Phe-CN | IV4 |
| R-Phe-Pyd-Phe-CN | IV5 |
| R-Phe-Pyr-Phe-CN | IV6 |
| R-Cyc-Pyr-Phe-CN | IV7 |
| R-Cyc-Pyd-Phe-CN | IV8 |

Component mixtures are very particularly preferred which, in addition to at least one compound selected from the compounds of the sub-formula Ia and in particular of the sub-formulae Ia2-1 - Ia2-6 and Ia3-1 - Ia3-16 contain one or more compounds selected from the compounds of the sub-formulae II1-II24, and at least one compound selected from the compounds of the sub-formulae IV1-IV8.

Systems according to the invention are also particularly preferred whose liquid crystal mixture is based on the compound classes

| | |
|---|---|
| R-Cyc-Phe-CN | II1 |
| R-Phe-Phe-CN | II5 |
| R-Cyc-Phe-Phe-CN | II9 |
| R-Phe-Phe-Phe-CN | II16 |

characterized in that, to increase the dielectric anisotropy, the liquid crystal mixture contains 5-60% of one or more

compounds of the following formulae

| | |
|---|---|
| R-Phe.2F-Phe-CN and/or R-Phe.3F-PHe-CN | II25 |
| R -Phe-Phe.3F-CN | Ia2-1 |
| R -Phe-Phe-Phe.3F-CN | Ia3-9 |
| R-Phe-Phe.2F-Phe-CN | II18 |
| R-Phe-Phe.3F-Phe-CN | II17 |
| R-Cyc-Phe.2F-Phe-CN | II26 |
| R-Cyc-Phe.3F-Phe-CN | II27 |
| R-Phe.F-Phe.F-Phe-CN | II28 |

where the meaning of $R^1$ and R is given above and R is, in particular, an alkyl group having 2-7 C atoms. Mixtures of this type are preferred and are a subject of this invention.

In the following, the component of this liquid crystal mixture based on the compounds II1, II5, II9 and II16 may be designated as component (i) thereof, while the component based on the compounds II25, Ia2-1, Ia3-9, II17, II18, II26, II27 and II28 may be designated component (ii). These liquid crystal mixtures may consist exclusively of the components (i) and (ii), but it is also possible that the liquid crystal mixture contains other components (iii) and (iv), the component (iii) containing other nematic or nematogenic substances which are selected such that the birefringence $\Delta n$ and/or the ordinary refractive index $n_0$ and/or other refractive indices and/or the viscosity and/or the dielectric anisotropy and/or other parameters of the liquid crystal are specifically optimized with respect to the respective application; a list of nematic or nematogenic substances which can preferably also be used for the component (iii) is given further blow. The component (iv) contains, for example, chiral dopants for inducing a cholesteric phase and/or pleochroitic dyes and/or other additives for modifying other properties of the liquid crystal mixture such as, for example, the conductivity; in this connection the compounds of the component (iv) can be both mesogenic and non-mesogenic.

The mass content of the component (i) in the liquid crystal is preferably 10-80%, in particular 15-70% and very particularly 15-65%. If the liquid crystal mixture is intended to have a high birefringence $\Delta n > 0.24$, the component (i) preferably contains 4-alkyl-and/or 4-alkoxy-4'-cyanobiphenyls and/or 4-alkyl- and/or 4-alkoxy-4''-cyanoterphenyls and/or 4-(trans-4-alkyl- or -trans-4-alkoxycyclohexyl)-4'-cyanobiphenyls. On the other hand, if it is intended for the liquid crystal mixture to have a birefringence $0.13 \leq \Delta n \leq 0.22$, the component (i) preferably contains 4-(trans-4-alkyl- or -trans-4-alkoxycyclohexyl)benzonitriles, in particular in addition to one or more of the high-$\Delta n$ compounds of the component (i) just mentioned.

In the laterally fluorinated biphenyls of the formulae II25 and Ia2-1, which are preferred, $R^1$ is preferably methyl, ethyl, propyl, butyl, pentyl, hexyl, heptyl, methoxy, ethoxy, propoxy, butoxy, pentoxy, hexoxy and heptoxy.

Furthermore, the component (ii) preferably contains 3-ring, laterally monofluorinated compounds of the formulae Ia3-9, II17, II18, II26 and II27. In these compounds, $R^1$ is preferably alkyl, alkoxy or alkoxyalkyl having 2-7 C atoms and in particular 2-5 C atoms.

If it is intended to obtain liquid crystal mixtures having a high clear point, the component (i) preferably contains 3-ring compounds of the formulae II9 and II16 and/or the component (ii) preferably contains 3-ring compounds of the formulae Ia3-9, II18, II17, II26, II27 and II28. Liquid crystal mixtures are particularly preferred which contain at least one compound of the formulae II9 and II16 and at least one compound of the formulae Ia3-9, II17, II18 and II26-28, as these mixtures in general have a relatively high or high value for $\Delta\varepsilon$ and at the same time a high clear point.

The liquid crystal mixtures containing a component (i) and (ii) preferably have a clear point $T_c > 75°C$, in particular $T_c > 80°C$ and very particularly $T_c > 85°C$.

The laterally fluorinated compounds of the formulae II25, Ia2-1, Ia3-9, II18, II17 and II26-II28 customarily have a very good solubility in the component (i) and in modified mixtures. The solubility of the laterally fluorinated terphenyls of the formulae Ia3-9, II18, II17 and II26-II28 in liquid crystal mixtures is in general substantially better than that of the non-fluorinated terphenyl of the formula II16.

Liquid crystal mixtures which contain one or more laterally fluorinated compounds of the formulae II25, Ia2-1, Ia3-9, II18, II17 and II26-II28 and in particular of the formulae Ia2-1, Ia3-9, II18, II17 and II25-27 are characterized by a substantially better UV and temperature stability than the mixtures E7 and E8 known from the prior art or, alternatively, comparable mixtures.

The liquid crystal mixtures containing a component (i) and (ii) and, if desired, also other components (iii) and (iv) and the electrooptical systems containing these have advantageous properties. The mixtures in particular have a high or relatively high birefringence and at the same time a high or relatively high dielectric anisotropy and/or a high clear point. The compounds of the formulae II1, II5, II9, II16, II25, Ia2-1, Ia3-9, II18, II17, II26, II27 and II28 are sufficiently stable to thermal and radiation energy for most applications and they are very stable to chemicals. The liquid crystal mixtures containing these compounds are highly nematic, in particular even at low temperatures, and have advantageous values for $\eta$. The electrooptical systems operated using these mixtures have favourable values for the electrooptical parameters and their temperature dependence, a high contrast and a low angular dependence of the contrast

and also a good preparation capability.

The compounds of the formula I are preferably prepared by the processes described in DE 3,102,017, JP 57-140,747, DE 3,233,641, DE 2,937,911, EP 0,097,033, DE 3,509,260, DE 3,732,284, DE 3,928,783, EP 0,194,153, JP 58-126,839, JP 58-210,045, WO 85/04674, DE 3,315,295, EP 0,193,191, JP 63-280,063, DE 3,825,428, DE 3,929,525, DE 4,024,760. DE 4,009,907, DE 4,007,040, DE 4,012,051, DE 3,939,116, PCT/EP90/00186, WO90/08757, DE 3,929,764, DE 4,004,650, DE 4,013,854 and DE 3,913,554.

Liquid crystal mixtures which, in addition to a dielectrically positive component A consisting of dielectrically positive compounds hating $\Delta\varepsilon > 2$, contain a dielectrically neutral component B consisting of compounds having $-2 \leq \Delta\varepsilon \leq +2$, and optionally a dielectrically negative component C consisting of compounds having $\Delta\varepsilon < -2$ are additionally preferred.

If the mass content of the dielectrically positive compounds in the liquid crystal is designated by a, that of the dielectrically neutral compounds by b and that of the dielectrically negative compounds correspondingly by c, a is ≥ 30% and in particular a is > 50%. If the dielectrically positive component A is based, in particular, on carbonitriles, the liquid crystal preferably contains a dielectrically neutral component in order to suppress the formation of dimers having dipole moments correlated in antiparallel fashion. The quotient of the mass content of dielectrically positive and neutral components is preferably

$$35 \geq \frac{a}{b} \geq 0.5$$

and in particular

$$15 \geq \frac{a}{b} \geq 1$$

If, on the other hand, the liquid crystal is based predominantly on liquid crystal compounds which contain F, Cl, $CF_3$, $OCF_3$, $OCHF_2$ or NCS as a polar terminal group, the content of dielectrically neutral compounds may be small or even 0; preferably b is ≤ 45%, in particular b is ≤ 35% and very particularly b is ≤ 25%.

The content of dielectrically negative compounds is in general small, as low switch voltages are customarily desired. Preferably, c is ≤ 10% and in particular c is ≤ 5%; liquid crystal mixtures having c ≤ 3% are in general particularly preferred.

Preferred liquid crystals are those which contain one or more dielectrically neutral compounds of the formula Ig

$$R^1\text{-}Q^4\text{-COO-}Q^5\text{-}R^2 \qquad \text{Ig}$$

in which
the radicals

$Q^4$ and $Q^5$ in each case independently of one another are

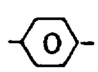, 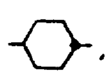, 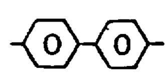, 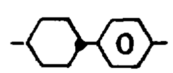, 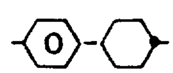 or 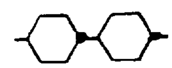

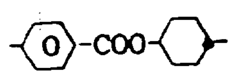

and one of $Q^4$ and $Q^5$ is also

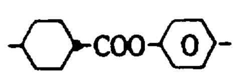, or 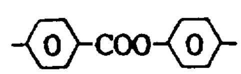,

and

R1 and R2 in each case independently of one another have the meaning given in Claim 1.

The compounds of the formula Ig include 2-ring compounds of the formula Ig2-1 and Ig2-2 which are preferred:

$$R^1\text{-Phe-COO-Phe-}R^2 \qquad \text{Ig2-1}$$

$$R^1\text{-Cyc-COO-Phe-}R^2 \qquad \text{Ig2-2}$$

In the compounds of the formulae Ig2-1 and Ig2-2, $R^1$ and $R^2$ independently of one another are preferably alkyl or alkoxy having 1-10, but in particular having 1-8, C atoms, additionally also n-alkoxyalkyl and in particular n-alkoxymethyl and n-alkoxyethyl. One of the two 2,4-phenylene groups of the compounds of the formula Ig2-1 and the 1,4-phenylene group of the compound of the formula Ig2-2 can be substituted in the 2- or 3-position by Cl or F, but in particular by F and/or in the 3-position.

Particularly preferred compounds are those of the formulae

$$R^1\text{-Phe-COO-Phe-alkyl or alkoxy} \qquad \text{Ig2-1a}$$

| | |
|---|---|
| $R^1$-Phe-COO-Phe.3F-alkyl or alkoxy | Ig2-1b |
| $R^1$-Phe-COO-Phe.2F-alkyl or alkoxy | Ig2-1c |
| $R^1$-Phe-COO-Phe.3F-alkoxymethyl | Ig2-1d |
| $R^1$-Cyc-COO-Phe-alkyl or alkoxy | Ig2-2a |
| $R^1$-Cyc-COO-Phe.2F-alkyl or alkoxy | Ig2-2b |
| $R^1$-Cyc-COO-Phe.3F-alkyl or alkoxy | Ig2-2c |

The compounds of the formula Ig additionally include 3-ring compounds in which one of the radicals $Q^1$ or $Q^2$ is 1,4-phenylene or trans-1,4-cyclohexylene and the other is

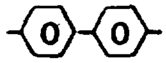, 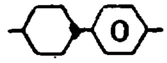, 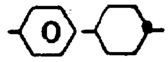, 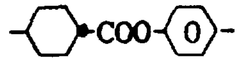,

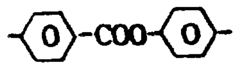 or 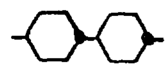.

Preferred compounds are those of the formulae

| | |
|---|---|
| $R^1$-Phe-COO-Phe.(F)-Phe-$R^2$ | Ig3-1 |
| $R^1$-Phe-Phe-COO-Phe.(F).$R^2$ | Ig3-2 |
| $R^1$-Cyc-Phe.(F)-COO-Phe.(F)-$R^2$ | Ig3-3 |
| $R^1$-Cyc-COO-Phe-COO-Phe.(F)-$R^2$ | Ig3-4 |
| $R^1$-Phe-COO-Phe.(F)-COO-Phe-$R^2$ | Ig3-5 |
| $R^1$-Cyc-Cyc-COO-Phe.(F)-$R^2$ | Ig3-6 |
| $R^1$-Phe-COO-Cyc-Cyc-$R^2$ | Ig3-7 |
| $R^1$-Cyc-OCO-Phe-Cyc-$R^2$ | Ig3-8 |
| $R^1$-Cyc-COO-Phe.(F)-Phe-$R^2$ | Ig3-9 |
| $R^1$-Phe.(F)-Phe-COO-Cyc-$R^2$ | Ig3-10 |

In the compounds of the sub-formulae Ig3-1 - Ig3-10, $R^1$ and $R^2$ are preferably independently of one another n-alkyl or n-alkoxy having 1-10 C atoms, and in addition also n-alkoxymethyl or n-alkoxyethyl having 1-8 C atoms. The compounds of the formula Ig3-1 - Ig3-10 can be laterally monosubstituted on one of the 1,4-phenylene groups by X = F or Cl, where substitution by F and/or in the 3-position is preferred.

Laterally un- or monosubstituted compounds of the formulae Ig3-1, Ig3-2, Ig3-3, Ig3-5, Ig3-6, Ig3-8, Ig3-9 and Ig3-10 are very particularly preferred, in which $R^1$ and $R^2$ independently of one another are methyl, ethyl, propyl, butyl, pentyl, hexyl, heptyl, octyl, methoxy, ethoxy, propoxy, butoxy, pentoxy, hexoxy, methoxymethyl, ethoxymethyl, propoxymethyl, butoxymethyl, pentoxymethyl, methoxyethyl, ethoxyethyl, propoxyethyl, butoxyethyl or pentoxyethyl.

The compounds of the formula Ig additionally include 4-ring compounds in which the radicals $Q^1$ and $Q^2$ in each case independently of one another are

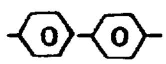, 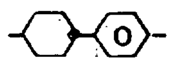, 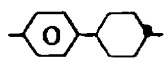,

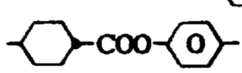, 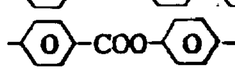 or 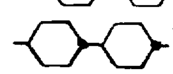

Preferred compounds are those of the formulae Ig4-1 - Ig4-10

| | |
|---|---|
| $R^1$-Phe-Phe-COO-Phe.(F)-Phe-$R^2$ | Ig4-1 |
| $R^1$-Phe.(F)-Phe-COO-Cyc-Phe-$R^2$ | Ig4-2 |
| $R^1$-Phe-Phe.(F)-COO-Phe-COO-Phe-$R^2$ | Ig4-3 |
| $R^1$-Phe-Phe.(F)-COO-Cyc-Cyc-$R^2$ | Ig4-4 |
| $R^1$-Cyc-Phe-COO-Phe.(F)-Phe-$R^2$ | Ig4-5 |
| $R^1$-Cyc-Phe-COO-Phe.(F)-COO-Phe.(F)-$R^2$ | Ig4-6 |
| $R^1$-Cyc-Phe-COO-Cyc-Cyc-$R^2$ | Ig4-7 |
| $R^1$-Cyc-Phe.(F)-COO-Phe-Cyc-$R^2$ | Ig4-8 |

$R^1$-Cyc-Cyc-COO-Phe-Cyc-$R^2$ Ig4-9

$R^1$-Cyc-COO-Phe-COO-Phe.(F)-Phe-$R^2$ Ig4-10

$R^1$ and $R^2$ in the compounds of the formulae Ig4-1 - Ig4-10 are preferably independently of one another methyl, ethyl, propyl, butyl, pentyl, hexyl, heptyl, octyl, nonyl, decyl, methoxy, ethoxy, propoxy, butoxy, pentoxy, hexoxy, heptoxy, octoxy, methoxymethyl, ethoxymethyl, propoxymethyl, butoxymethyl, methoxyethyl, ethoxyethyl or propoxyethyl. Particularly preferred are the terminally symmetrically substituted compounds of the formulae Ig4-1, Ig4-3, Ig4-4 and Ig4-8. The compounds of the formulae Ig4-1 - Ig4-10 can be laterally monosubstituted by F or Cl on one of the 1,4-phenylene groups, substitution by F in the 2- or 3-position being preferred. The compounds of the formula Ig4-9 are additionally preferred.

The compounds of the formula Ig are preferably prepared by transesterification of appropriately substituted phenols or phenoxides with appropriately substituted carboxylic acids or reactive carboxylic acid derivatives, such as is described, for example, in DE 2,167,252, DE 2,800,553, DE 2,536,046, DE 2,123,175 and DE 2,139,628.

Liquid crystal mixtures which contain one or more compounds selected from the group of compounds of the formula Ig and in particular of the preferred sub-formulae Ig2-1, Ig2-2, Ig2-1a-1d, Ig2-2a-2c, Ig3-1 - Ig3-10 and Ig4-1 - Ig4-10 are distinguished by advantageous values for the dielectric anisotropy $\Delta\varepsilon$, a high stability, easy preparation capability, low miscibility with the polymer used for the matrix and in particular by a broad mesogenic range, a relatively high clear point and advantageous values for the birefringence and flow viscosity.

The liquid crystal mixtures preferably contain 1-40% and in particular 5-30% of compounds of the formula Ig and in particular of the preferred sub-formulae. In this connection, the liquid crystal mixtures preferably contain 1-5 and in particular 1-3 compounds of the formula Ig and in particular of the preferred sub-formulae.

Liquid crystal mixtures are particularly preferred which contain at least one compound selected from the group of compounds of the formula Ig and in particular of the preferred sub-formulae Ig2-1 - Ig2-2, Ig2-1a-1d, Ig2-2a-2c, Ig3-1 - Ig3-10 and Ig4-1 - Ig4-10, and additionally one or more compounds selected from the group of compounds II1-II28, III1-III3 and IV1-IV8. The mass content of the component mixture consisting of at least one compound of the formulae Ig and in particular of the preferred sub-formulae and additionally of at least one compound of the formulae II1-II28, III1-III3 and IV1-IV8 in the liquid crystal mixture used according to the invention is preferably 15%-100%, but in particular 25%-100%.

Liquid crystal mixtures which are based on component mixtures which consist of at least one laterally unsubstituted compound of the formula Ig2-1 and of one or more compounds of the formula IV1 are much preferred for matrix systems, but on the other hand less preferred for network systems.

The following smaller group of component mixtures T(Ig) which contain at least one compound each from the substance classes shown in each case is also particularly preferred:

| | |
|---|---|
| T(Ig)1: | Ig2-1a, Ig2-1b and/or Ig2-1c II1, II5, II6, IV1, IV2, IV3 and/or IV4 |
| T(Ig)2: | Ig2-2a, Ig2-2b and/or Ig2-2c II1, II5, II6, III1, III2, IV1, IV2, IV3 and/or IV4 |
| T(Ig)3: | Ig3-1, Ig3-3, Ig3-6, Ig3-9 and/or Ig3-10 II1, II2, II3, II4, II5, II6, IV1 and/or IV2 |

Liquid crystal mixtures which are additionally preferred are those which contain one or more compounds of the formula Ih

$$R^1\text{-}Q^6\text{-}C\equiv C\text{-}Q^7\text{-}R^2 \qquad \text{Ih}$$

in which

at least one of the two radicals $R^1$ and $R^2$ has the meaning given in Claim 1,
one of the two radicals $R^1$ and $R^2$ is also F, Cl, $OCF_3$, $OCHF_2$ or $CF_3$, and
the radicals $Q^6$ and $Q^7$ in each case independently of one another are

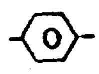 , 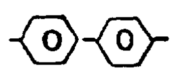 , 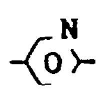

or

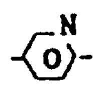 ,

$Q^6$ is also

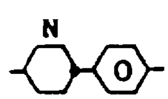 .

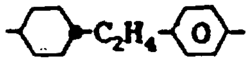 or 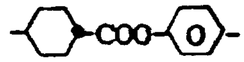

and $Q^7$ is also

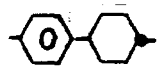

The compounds of the formula Ih include 2-ring compounds, those of the formulae I2h-1 - I2h-3 being preferred:

$R^1$-Phe-C≡C-Phe-$R^2$ Ih2-1

$R^1$-Pyr-C≡C-Phe-$R^2$ Ih2-2

$R^1$-Pyd-C≡C-Phe-$R^2$ Ih2-3

In the compounds of the formulae Ih2-1- Ih2-3, which have 2 non-polar radicals, $R^1$ and $R^2$ independently of one another are preferably alkyl or alkoxy having 1-10, but in particular having 1-8, C atoms, additionally also n-alkoxyalkyl and in particular n-alkoxymethyl and -alkoxyethyl. One of the 1,4-phenylene groups contained in the compounds of the formulae Ih2-1 -Ih2-3 can be replaced by Cl or F in the 2- or 3-position, but in particular by F.

The following compounds are particularly preferred:

$R^1$-Phe-C≡C-Phe-alkyl Ih2-1a

$R^1$-Phe-C≡C-Phe.2F-alkyl or alkoxy Ih2-1b

$R^1$-Phe-C≡C-Phe.3F-alkyl or alkoxy Ih2-1c

$R^1$-Pyr-C≡C-Phe.3F-alkyl or alkoxy Ih2-2a

$R^1$-Pyd-C≡C-Phe.3F-alkyl or alkoxy Ih2-3a

Compounds of the formulae Ih2-1 -Ih2-3 in which one of the radicals $R^1$ or $R^2$ is F, Cl, $OCF_3$, $OCHF_2$ or $CF_3$ and in particular F or Cl are additionally preferred. These compounds have relatively high values for the optical and dielectric anisotropy and are at. the same time characterized by relatively low values for the viscosity $\eta$. One of the two 1,4-phenylene groups can be replaced by Cl or F in the 2- or 3-position, but in particular by F and/or in the 3-position.

The following compounds of the formulae Ih2 are particularly preferred

$R^1$-Phe-C≡C-Phe-$R^2$ Ih2-1d

$R^1$-Phe.3F-C≡C-Phe-$R^2$ Ih2-1e

$R^1$-Phe.2F-C≡C-Phe-$R^2$ Ih2-1f

$R^1$-Phe-C≡C-Phe.2F-$R^2$ Ih2-1g

$R^1$-Phe-C≡C-Phe.3F-$R^2$ Ih2-1h

$R^1$-Phe-C≡C-Pyr-$R^2$ Ih2-2b

$R^1$-Phe-C≡C-Pyd-$R^2$ Ih2-3b

$R^1$-Pyr-C≡C-Phe-$R^2$ Ih2-2c

$R^1$-Pyd-C≡C-Phe-$R^2$ Ih2-3c

where $R^1$ is F, Cl, $OCF_3$, $OCHF_2$ or $CF_3$ and $R^2$ is alkyl or alkoxy having 1-7 C atoms.

The compounds of the formula I additionally include 3-ring compounds of which those of the sub-formulae Ih3-1 - Ih3-10 are preferred:

$R^1$-Phe-C≡C-Phe-Phe-$R^2$ Ih3-1

$R^1$-Phe.(F)-C≡C-Phe-Cyc-$R^2$ Ih3-2

$R^1$-Pyr-C≡C-Phe-Phe-$R^2$ Ih3-3

$R^1$-Pyd-C≡C-Phe-Phe-$R^2$ Ih3-4

$R^1$-Pyr-C≡C-Phe-Cyc-$R^2$ Ih3-5

$R^1$-Pyd-C≡C-Phe-Cyc-$R^2$ Ih3-6

$R^1$-Cyc-$CH_2CH_2$-Phe-C≡C-Phe-$R^2$ Ih3-7

$R^1$-Cyc-$CH_2CH_2$-Phe-C≡C-Pyd-$R^2$ Ih3-8

$R^1$-Cyc-$CH_2CH_2$-Phe-C≡C-Pyr-$R^2$ Ih3-9

$R^1$-Cyc-COO-Phe-C≡C-Phe.(F)-$R^2$ Ih3-10

In the compounds of the sub-formulae Ih3-1 - Ih3-10, $R^1$ and $R^2$ in compounds having 2 non-polar radicals are preferably independently of one another n-alkyl or n-alkoxy having 1-10 C atoms, and in addition also n-alkoxymethyl or n-alkoxyethyl having 1-8 C atoms. Compounds of the formulae Ih3-1 - Ih3-10 which have a polar radical F, Cl, $OCHF_2$, $OCF_3$ or $CF_3$, where the other radical is in particular alkyl or alkoxy having 1-8 C atoms, are preferred. The compounds of the formula Ih3-1 - Ih3-10 can be laterally monosubstituted by X = F or Cl on one of the 1,4-phenylene groups in each case present in the molecule. The following monosubstituted compounds of the formulae -Ih3-1a-1d, Ih3-2a-2b, Ih3-5a and Ih3-6a-6b are particularly preferred:

$R^1$-Phe-C≡C-Phe-Phe.3F-$R^2$ Ih3-1a

$R^1$-Phe-C≡C-Phe-Phe.3Cl-$R^2$ Ih3-1b

$R^1$-Phe-C≡C-Phe.3F-Phe-$R^2$ Ih3-1c

$R^1$-Phe-C≡C-Phe.3Cl-Phe-$R^2$ Ih3-1d

$R^1$-Phe-C≡C-Phe.3F-Cyc-$R^2$ Ih3-2a

$R^1$-Phe-C≡C-Phe.3Cl-Cyc-$R^2$ Ih3-2b

$R^1$-Pyr-C≡C-Phe-Phe.F-$R^2$ Ih3-5a

$R^1$-Pyd-C≡C-Phe-Phe.F-$R^2$ Ih3-6a

$R^1$-Pyd-C≡C-Phe.F-Phe-$R^2$ Ih3-6b

where in the compounds of the formulae Ih3-1a-1d, Ih3-5a and Ih3-6a-6b in particular $R^2$ and in the compounds of the formulae Ih3-2a-2b in particular $R^1$ is a polar group.

The compounds of the formula Ih additionally include 4-ring compounds of which those of the sub-formulae Ih4-1 - Ih4-5 are preferred:

$R^1$-Phe-Phe-C≡C-Phe.(F)-Phe.(F)-$R^2$ Ih4-1

$R^1$-Phe-Phe.(F)-C≡C-Phe-Cyc-$R^2$ Ih4-2

$R^1$-Cyc-Phe-C≡C-Phe.(F)-Cyc-$R^2$ Ih4-3

$R^1$-Cyc-$CH_2CH_2$-Phe-C≡C-Phe.(F)-Cyc-$R^2$ Ih4-4

$R^1$-Cyc-$CH_2CH_2$-Phe-C≡C-Phe.(F)-Cyc-$R^2$ Ih4-5

In the compounds of the formulae Ih4-1 - Ih4-5, one of the two radicals $R^1$ and $R^2$ is preferably polar and the other is preferably independently of one another methyl, ethyl, propyl, butyl, pentyl, hexyl, heptyl, octyl, nonyl, decyl, methoxy, ethoxy, propoxy, butoxy, pentoxy, hexoxy, heptoxy, octoxy, methoxymethyl, ethoxymethyl or propoxyethyl.

The symmetrically substituted compounds of the formulae Ih4-1 and Ih4-3 having two non-polar radicals are additionally preferred. The compounds of the formulae Ih4-1 - Ih4-5 can be laterally monosubstituted by F or Cl on one of the 1,4-phenylene groups, substitution in the 3-position being preferred.

The compounds of the formula Ih are preferably prepared by the methods described in DE 2,226,376, GB 2,155,465, GB 2,189,785, DE 3,711,306, JP 61-260,031, DE 3,710,069, JP 02-062,861, JP 63-060,972, EP 0,255,700 and EP 0,276,067.

Liquid crystal mixtures which contain one or more compounds selected from the group of compounds Ih and in particular of the preferred compounds Ih2-1 - Ih2-3, Ih2-1a-1h, Ih2-2a-2c, Ih2-3a-3c, Ih3-1 - Ih3-10, Ih3-1a-1d, Ih3-2a-2b, Ih3-5a, Ih3-6a-6b and Ih4-1 - Ih4-5 are distinguished by a broad mesogenic range, a relatively high clear point, a high stability, a low miscibility with the polymer used for the matrix and in particular by advantageous values for the dielectric anisotropy and viscosity and by a high birefringence.

The liquid crystal mixtures preferably contain 1-40% and in particular 5-30% of compounds of the formula Ih and in particular of the preferred sub-formulae. In this case, the liquid crystal mixtures preferably contain 1-5 and in particular 1-3 compounds of the formula Ih and in particular of the preferred sub-formulae.

Liquid crystal mixtures are particularly preferred which contain at least one compound selected from the group of compounds of the formula Ih and in particular of the preferred sub-formulae, and additionally one or more compounds selected from the group of compounds II1-II28, III1-III3 and IV1-IV8. The mass content of the component mixture consisting of at least one compound of the formula Ih and in particular of the preferred sub-formulae and additionally of at least one compound of the formulae II1-II28, III1-III3 and IV1-IV8 in the liquid crystal mixture used according to the invention is preferably 15%-100%, but in particular 25%-100%.

Liquid crystal mixtures which are based on component mixtures which contain at least one compound of the formula Ih2-1 and additionally at least one compound of the formula IV1 and/or IV2 are particularly preferred for matrix applications, but are less suitable for network applications. The same applies to liquid crystals which are based on component mixtures which contain at least one compound of the formula Ih3-10 and/or Ih3-2 and at least one compound of the formula IV1.

Liquid crystal mixtures which are based on the following component mixtures T(Ih3) which contain at least one compound each from the compound classes of the formulae shown in each case are preferred both for matrix systems and for network systems. In the table, the preferred mass content of these compounds in the component mixtures is additionally given.

Liquid crystal mixtures are additionally particularly preferred which, in addition to one or more compounds selected from the compound classes Ia, Ib, Ic, Id, Ie, If, Ig and Ii, and at least one compound selected from the group of compounds of the formulae II-IV, additionally contain a further compound which is selected from the group of compounds of the formula Ih*

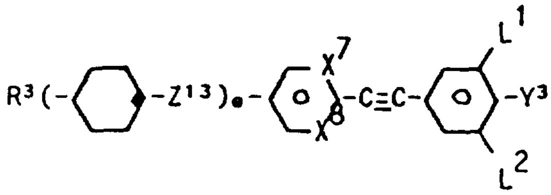

Ih*

in which

$R^3$ is an alkyl group having 1-10 C atoms, in which a $CH_2$ group can also be replaced by -O- or -CH=CH-,
$Z^{13}$ is a single bond, -COO- or $-CH_2CH_2-$,
$X^7$ and
$X^8$ independently of one another are CH or N,
$L^1$ and
$L^2$ independently of one another are H or F and
$Y^3$ is F, Cl, $CF_3$, $OCF_3$ or $OCHF_2$.

The compounds of the formula Ih* include a section of the compounds of the formula Ih which have a polar radical F, Cl, $CF_3$, $OCF_3$ or $OCHF_2$, and moreover further preferred compounds, of which the following should be explicitly mentioned:

$R^3$-Phe-C≡C-Phe.3F5F-$Y^3$ Ih* 2-1

$R^3$-Pyd-C≡C-Phe.3F5F-$Y^3$ Ih* 2-2

$R^3$-Pyr-C≡C-Phe.3F5F-$Y^3$ Ih* 2-3

$R^3$-Cyc-Pyr-C≡C-Phe.3F5F-$Y^3$ Ih* 3-1

$R^3$-Cyc-Pyd-C≡C-Phe.(F,2)-$Y^3$ ih* 3-2

$R^3$-Cyc-$CH_2CH_2$-Pyr-C≡C-Phe.(F,2)-$Y^3$ Ih* 3-3

$R^3$-Cyc-COO-Pyd-C≡C-Phe.(F,2)-$Y^3$ Ih* 3-4

The preferred liquid crystal mixtures which, in addition to at least one compound of the formulae Ia-Ig and Ii and at least one compound of the formulae II-IV, contain at least one compound of the formula Ih* as a 3rd obligatory component, preferably contain one of the preferred compounds just mentioned and/or one of the preferred compounds of the formulae Ih2-1 - Ih2-2, Ih2-1a - 1h, Ih2-2a - 2c, Ih2-3a - 3c, Ih3-1 - Ih3-10, Ih3-1a - 1d, Ih3-2a - 2b, Ih3-5a, Ih3-6a - 6b and Ih4-1 - 1h4-5.

These mixtures are distinguished by a high stability and high birefringence and are particularly suitable for matrix applications and very particularly suitable for network systems.

In this case, the mass content of the compounds which are selected from the group of compounds of the formulae Ih and Ih* is preferably more than 5%, in particular not less than 7.5% and particularly than 10% and very particularly more than 20%. The 3rd obligatory component of these liquid crystal mixtures very particularly preferably contains compounds of the formula alkyl- or alkoxy

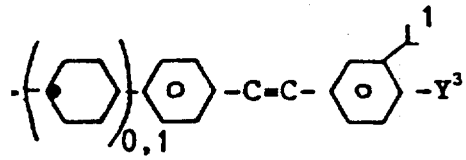

in which the meaning of $L^1$ and $Y^3$ is given above.

Mixtures are also particularly preferred which are based on component mixtures which- contain at least one compound of the formula II, at least one compound of the formulae IV1-IV8 and at least one compound of the formula Ih*. In this case, the following smaller sub-group of component mixtures is particularly preferred which contains at least one compound each from each of the groups E, F and G; in this case the mass content of the compounds from the respective groups in the component mixture is preferably in the mass per cent ranges given:

| Group | E | F | G |
|---|---|---|---|
| Mass content in the component mixture [%] | 10-80 | 5-65 | 10-50 preferably 18-50, in particular 23-50 |
| Compounds | II1, II2, II3, II4, II5, II6, II7, II8, II9, II16, II17, II18 | IV1, IV2, IV3, IV4, IV5, IV6 | Ih2-1, Ih2-2, Ih2-3, Ih3-1, Ih3-2, Ih3-3, Ih3-4, Ih3-7, Ih3-8, Ih*2-1, Ih*2-2, Ih*2-3 |

The sum of the mass contents of the compounds from the groups E, F and G in the component mixture is 100%, and the mass content of the component mixtures in the liquid crystal mixtures which can be used according to the invention is preferably 25%-100%.

Liquid crystal mixtures are further particularly preferred which, in addition to one or more compounds selected from the compound classes Ia, Ib, Ic, Id, Ie, Ig, Ih and Ii, and at least one compound selected from the group of compounds of the formulae II-IV, additionally contain a further compound which is selected from the group of compounds of the formula If*

- 141 -

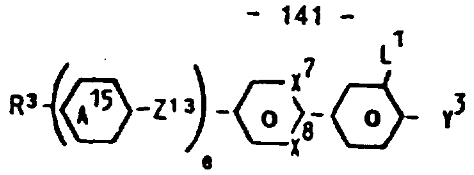

If*

in which

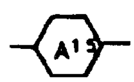

is trans-1,4-cyclohexylene or 1,4-phenylene and the meaning of $R^3$, $Z^{13}$, $X^7$, $X^8$, $L^1$, e and $Y^3$ is given above. The compounds of the formula If* represent a smaller preferred sub-group which is selected from the compounds of the formulae IfF, IfCl and IfCl.F. The mass content of the compounds of the formula If* in at least 3-component liquid crystal mixtures of this type is preferably not less than 5%, in particular more than 10% and very particularly more than 20% and can be up to 55%. Liquid crystal mixtures of this type have advantageous properties and are characterized in particular by a high stability and favourable values of the electrooptical parameters. Liquid crystal mixtures which, in addition to at least one compound of the formulae Ia-Ie and Ig-Ii and in addition to a compound of the formulae II-IV, contain at least one of the following preferred compounds are very particularly preferred:

$R^3$-Phe-Phe.(F)-F

$R^3$-Phe-Phe.(F)-Cl

$R^3$-Pyp-Phe-F

$R^3$-Pyp-Phe.3F-F

$R^3$-Pyp-Phe-Cl

$R^3$-Pyp-Phe.3F-Cl

$R^3$-Pyr-Phe-F

$R^3$-Pyr-Phe.3F-F

$R^3$-Pyr-Phe-Cl

$R^3$-Pyr-Phe-.3F-Cl

Component mixtures are particularly preferred in which

- the 1st obligatory component contains at least one compound of the formulae Ia-Ie having a mass content in the component mixture between 10% and 90%,
- the 2nd obligatory component contains one or more compounds which are selected from the group of compounds II1, II2, II3, II4, II5, II6, II7, II8, II9, II16, II17, II18, II25, II26, II27, II28, III1, III2, IV1, IV2, IV3, IV4, IV7 and IV8, the mass content of this component in the component mixture being between 5 and 80%, and
- the 3rd obligatory component contains one or more of the abovementioned preferred 2-ring compounds and/or one or more more of the following compounds

$R^3$-Cyc-Phe-Phe.(F)-F

$R^3$-Cyc-Phe-Phe.(F)-Cl

$R^3$-Phe-Pyr-Phe.(F)-F

$R^3$-Phe-Pyr-Phe.(F)-Cl

$R^3$-Phe-Pyr-Phe.(F)-$CF_3$

$R^3$-Phe-Pyd-Phe.(F)-F

$R^3$-Phe-Pyr-Phe-(F)-Cl

$R^3$-Phe-Pyr-Phe.(F)-$OCF_3$

having a mass content in the component mixture of 5%-65%, in particular 10%-65% and very particularly 12.5%-65%.

The sum of the mass contents in the component mixture is 100%, and the mass content of the component mixture in the liquid crystal mixture is preferably 25%-100%.

Liquid crystal mixtures are furthermore particularly preferred which, in addition to one or more compounds selected from the group of compounds of the formula: Ia-Ie and Ig-Ii and one or more compounds selected from the group of compounds of the formulae II-IV, additionally contain at least one compound of the formula If**

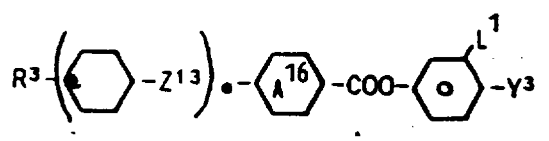

If**

in which

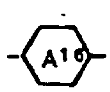

is trans-1,4-cyclohexylene, 1,4-pheny lene or 3-fluoro-1,4-phenylene and the meaning of $Z^{13}$, $L^1$, $Y^3$, $R^3$ and e is given above. The compounds of the formula If** represent a preferred smaller sub-group which is selected from the compounds of the formulae IfF, IfCl and IfCl.F.

Liquid crystal mixtures which, in addition to a compound of the formulae Ia-Ie and Ig-Ii, contain a compound of the formulae II-IV and additionally a compound of the formula If** are characterized by preferred properties and in particular a high stability, a favourable working temperature range and advantageous threshold voltage. The mass content of compounds of the formula If** in these liquid crystal mixtures is preferably more than 5%, in particular more than 10% and very particularly more than 15%. The following smaller group of compounds of the formula If** is very particularly preferred:

$R^3$-Cyc-COO-Phe.(F)-$Y^3$ If**2-1

$R^3$-Phe-COO-Phe.(F)-$Y^3$ If**2-2

$R^3$-Cyc-Cyc-COO-Phe.(F)-$Y^3$ If**3-1

$R^3$-Cyc-Phe-COO-Phe.(F)-$Y^3$ If**3-2

The following liquid crystal mixtures which contain at least one compound each in the mass ranges mentioned from the groups H, I and K characterized in more detail in the following are additionally very particularly preferred:

| Group | H | I | K |
|---|---|---|---|
| Mass content of the component mixture | 20%-80% | 10%-80% | 5%-50% |
| Compounds | II1, II2, II3, II4, II5, II6 II7, II8, II9, II16 II17, II18, II25, II26, II27, II28, III1 | Ib | If**2-1, If**2-2, If**3-1, If**3-2 |

The sum of the mass contents in the component mixtures is 100% in this case, and the mass contents of the component mixtures in the liquid crystal mixtures used according to the invention is preferably 10%-85%.

The liquid crystals according to the invention may contain, in addition to the compounds of the formula I according to the invention and in particular of the preferred sub-formulae and very particularly of the preferred liquid crystal mixtures, further components which are preferably selected from nematic or nematogenic (monotropic or isotropic) substances, in particular substances from the classes consisting of the azoxybenzenes, benzylideneanilines, biphenyls, terphenyls, phenyl or cyclohexyl benzoates, cyclohexanecarboxylic acid phenyl or cyclohexyl esters, phenyl or cyclohexyl esters of cyclohexylbenzoic acid, phenyl or cyclohexyl esters of cyclohexylcyclohexanecarboxylic acid, cyclohexylphenyl esters of benzoic acid, cyclohexanecarboxylic acid, or of cyclohexylcyclohexanecarboxylic acid, phenylcyclohexanes, cyclohexylbiphenyls, phenylcyclohexylcyclohexanes, cyclohexylcyclohexanes, cyclohexylcyclohexenes, cyclohexylcyclohexylcyclohexenes, 1,4-bis-cyclohexylbenzenes, 4,4'-bis-cyclohexylbiphenyls, phenyl- or cyclohexylpyrimidines, phenyl- or cyclohexylpyridines, phenyl- or cyclohexyldioxanes, phenyl- or cyclohexyl-1,3-dithianes, 1,2-diphenylethanes, 1,2-dicyclohexylethanes, 1-phenyl-2-cyclohexylethanes, 1-cyclohexyl-2-(4-phenylcyclohexyl)ethanes, 1-cyclohexyl-2-biphenylethanes, 1-phenyl-2-cyclohexylphenylethanes, optionally halogenated stilbenes, benzyl phenyl ethers, tolans and substituted cinnamic acids. The 1,4-phenylene groups in these compounds can also be fluorinated.

In these compounds, the two terminal groups are preferably in each case independently of one another alkyl, alkenyl, alkoxy, alkenyloxy or alkanoyloxy having up to 8 carbon atoms. In most of these compounds, R' and R'' are different from one another, one of these radicals usually being alkyl or alkenyl.

However, it is also possible that one and/or both terminal groups are a polar radical -CN, -NCS, -F, -Cl or $(O)_iCX_kH_{3-k}$, where i is 0 or 1, k is 1, 2 or 3 and X is F or Cl. If only one of the terminal groups is one of the polar radicals mentioned, the other is preferably alkyl or alkenyl.

Many substances of this type or, alternatively, mixtures thereof are commercially available. All these substances are obtainable by methods known from the literature or in analogy thereto.

The liquid crystals used in the electrooptical liquid crystal systems according to the invention preferably contain 1%-100%, in particular 10%-100% and very particularly 20%-100% of compounds of the formula I. In this case, liquid crystal mixtures are preferred which contain 1-20 and in particular 1-15 compounds of the formula I. If the liquid crystal compounds of the formula I are selected from only one sub-group of the formulae Ia-Ii, the liquid crystal mixture preferably contains 1-5 and in particular 1-3 compounds of this sub-formula of formula I.

The liquid crystal mixtures are preferably based on compounds which are selected from the group of the formulae I, II, III and IV. The mass content of the compounds selected from the group of the formulae I, II, III and IV in the liquid crystal mixture is preferably 5%-100%, in particular 10%-100% and very particularly 15%-98%. The liquid crystal mixtures according to the invention preferably contain 2-40, but in particular 2-38 and very particularly 2-35 compounds, selected from the group of compounds of the formulae I, II, III, IV and V.

The dielectric anisotropy of the liquid crystal mixture used is positive $\Delta\varepsilon > 0$ and preferably $\Delta\varepsilon > 3$.

For smaller values of the dielectric anisotropy $\Delta\varepsilon$, very high threshold voltages are observed. Particularly preferred values are $\Delta\varepsilon > 5$, very particularly $\Delta\varepsilon > 8$.

It has been found that liquid crystal mixtures which are based on medium polarity compounds with

$$3 \leq \Delta\varepsilon \leq 20 \quad (*1)$$

and in particular

$$3 \leq \Delta\varepsilon \leq 15 \quad (*2)$$

have particularly advantageous properties and in particular a high temperature and UV stability and a high specific resistance. Mixtures of this type are particularly suitable for systems having a high information content, which are controlled using an active or passive matrix and furthermore in particular also for systems which have to tolerate relatively high operating temperatures (for example systems for outdoor applications). The mass content of medium polarity compounds in the liquid crystal mixture is preferably not less than 50%, in particular at least 60% and very particularly at least 65%.

It has in particular been shown that compounds of the formula I where W = -F, -Cl, $-CF_3$, $-OCF_3$, $-OCHF_2$ or NCS

and in particular W = -F, -Cl, $-CF_3$, $-OCF_3$ or $-OCHF_2$ frequently have a dielectric constant in the preferred ranges (*1) or (*2), while liquid crystal compounds where W = -CN frequently have an overhigh dielectric constant and are less suitable for mixtures of this type; the mass content in compounds which have a terminal carbonitrile group in the liquid crystal mixtures based on medium polarity compounds is preferably less than 15% and in particular not more than 10%. If highly polar additives with $\Delta\varepsilon > 20$ are necessary, for example for reducing the threshold voltage, compounds are preferably used in which one terminal group has the meaning given for $R^1$ while the other terminal group is given by

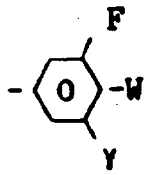

where

W is -F, -Cl, $-CF_3$, $-OCF_3$ or $-OCHF_2$ and
Y is H or F.

Compounds where W = -Cl are as a rule characterized by a higher birefringence $\Delta n$ in comparison to corresponding compounds where W = -F and are therefore often preferred if a high birefringence is desired, for example for increasing the scattering in the opaque state.

The present invention makes available to the person skilled in the art a limited pool of particularly preferred compounds of the formula I and in particular of the formulae Ia-Ii and particularly preferred liquid crystal component mixtures. Liquid crystal mixtures which contain one or more compounds of the formula I and in particular of the formulae Ia-Ii and very particularly at least one of the component mixtures mentioned have advantageous properties and correspond to the requirements described at the beginning, which are set for use in an electrooptical system according to the preamble of Claim 1, to a particularly high extent and very much better than the liquid crystal mixtures hitherto used in these systems. In this case, on the basis of the detailed description the person skilled in the art can at any time make a selection from the described pool of preferred liquid crystal compounds and liquid crystal component mixtures without inventive assistance in such a way that the birefringence $\Delta n$ and/or the ordinary refractive index $n_0$ and/or other refractive indices and/or the viscosity and/or the dielectric anisotropy and/or the clear point and/or additional parameters of the liquid crystal and/or the threshold voltage and/or further electrooptical parameters of the system and/or their temperature dependence and/or the working temperature range and/or the solubility of the liquid crystal in the monomers or oligomers for.polymerizing and/or in the cured matrix or the cured network and/or further parameters of the liquid crystal and the system with respect to the particular application are optimized.

If, for example, a high clear point is necessary, the person skilled in the art will preferably make a selection among the compounds of the formula I and in particular the sub-formulae Ia-Ii and the preferred component mixtures such that the mass content of 2-ring compounds in the liquid crystal mixture is not too high. In addition, the person skilled in the art can also add, for example, 4-ring compounds of the formulae Ie4-1 - Ie4-4 or, alternatively, other highly clearing substances such as, for example,

$$R^2\text{-Phe-Phe-Cyc-}R^3$$

$$R^2\text{-Cyc-Phe-Phe-Cyc-}R^3$$

to the liquid crystal.

In these compounds, $R^2$ and $R^3$ are in each case independently of one another preferably alkyl, methoxy, alkoxycarbonyl or alkanoyloxy having 1-15 C atoms.

Additives of this type are known to the person skilled in the art and he can choose from the substance classes enumerated above without problem. In this connection, the person skilled in the art will preferably choose the concentration of additives of this type in such a way that in particular $\Delta n$ and/or $n_0$ and/or another refractive index and/or $\Delta\varepsilon$ to be adjusted in the particular embodiment of the electrooptical system according to the invention and/or $\Delta\varepsilon$ and/or further physical parameters important for the particular application are only influenced to an acceptable and/or small and/or in particular negligible extent.

If the system according to the invention is controlled, for example using an alternating voltage, the use of a highly viscous liquid crystal mixture is necessary, as otherwise, in particular at low to medium frequencies, a flickering display results. In order to increase the viscosity, the person skilled in the art can add highly viscous liquid crystal compounds to the liquid crystal mixture. These compounds are preferably selected from the group of compounds of the formula I and in particular of the formulae Ia-Ii, but they can also be taken from the abovementioned substance classes. In particular, one or more side chain polymers can also be added to increase the viscosity, as is described in DE 3,919,942. If, on the other hand, the electrooptical system is used, for example, as a matrix display having a high information

content, low viscosity liquid crystal mixtures are suitable in particular for achieving small switch times.

The person skilled in the art will in this case preferably make a selection from the group of compounds of the formula I and in particular of the formulae Ia-Ii in such a way that the content of 3- and 4-ring compounds is not too high; if the use of a high content of 3- and 4-ring compounds is necessary for achieving a high clear point, the person skilled in the art will in general prefer laterally fluorinated or chlorinated compounds of the formulae Ia-Ii. However, it is also possible for the person skilled in the art to choose from the substance classes enumerated above those with low viscosity, such as, for example

$R^2$-Cyc-Phe.3F-Phe-$R^3$

and to add them to the liquid crystal mixture according to the invention. $R^2$ and $R^3$ in this compound mentioned by way of example preferably have the abovementioned meanings.

The person skilled in the art will select the substances used for modifying the viscosity and their concentration such that other crucial parameters of the liquid crystal mixture such as, for example, $\Delta\varepsilon$ and, when using viscosity-reducing agents, in particular $T_c$, is only influenced to an acceptable and/or small and/or insignificant extent.

If desired, highly nematogenic substances such as, for example

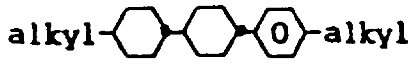

can be added, the person skilled in the art taking into account that other parameters and in particular the solubility of the liquid crystal mixture in the polymer used for the matrix is not to be too greatly altered by additions of this type.

In the case of liquid crystal mixtures which contain compounds of the formulae II-IV, for example, in order to modify the birefringence the person skilled in the art can vary the relative content of these compounds in the mixture; for mixtures having very high $\Delta n$, compounds of the formulae II1, II16, IV3 or IV4 for example, can in particular be used, while, for example, compounds of the formulae III1-III3 are preferred for liquid crystal mixtures having relatively low values of $\Delta n$. The person skilled in the art can of course also make a preferred selection from the compounds of the formula I with respect to the desired value of $\Delta n$ without problem. Thus, for example, compounds of the formula Ig are in general particularly preferred for mixtures having a relatively high or high $\Delta n$, while compounds having 2 or more saturated ring systems are in general particularly suitable for liquid crystal mixtures according to the invention having relatively low or low values of $\Delta n$.

In order to achieve low threshold voltages, liquid crystal mixtures having a very high dielectric anisotropy $\Delta\varepsilon$ are in general required. The person skilled in the art can make a selection from the group of compounds of the formula I, in particular of the formulae Ia-Ii, and furthermore from the group of compounds of the formulae II-IV and from the group of preferred component mixtures in such a way that a preferred value is obtained for $\Delta\varepsilon$. In order to increase $\Delta\varepsilon$, the person skilled in the art can add to the liquid crystal mixture, for example, a compound of the formula II6. These compounds are extremely strongly dielectrically positive; the propyl homologue (alkyl = $C_3H_7$) has, for example, a value of $\Delta\varepsilon = 50$. The person skilled in the art will select the concentration of additives of this type so that the liquid crystal mixture is optimally suited to the particular embodiment of the electrooptical system; in particular, he will take care that $\Delta n$ and/or $n_0$ and/or one or more further refractive indices of the liquid crystal are only influenced to an acceptable and/or small and/or negligible extent.

The person skilled in the art can modify and, within certain limits, optimize the properties of liquid crystal mixtures according to the invention with respect to the particular application by making a selection from the group of compounds of the formula I and in particular of the formulae Ia-Ii, and furthermore optionally from the group of compounds of the formulae II-IV and the group of preferred component mixtures such that the liquid crystal mixture is optimized with respect to the particular application.

However, it is crucial that liquid crystals containing compounds of the formula I and in particular of the formulae Ia-Ii and in particular those liquid crystal mixtures which contain one or more compounds of the formulae II-IV are particularly suitable for use in electrooptical liquid crystal systems according to the invention. Very particularly suitable liquid crystal mixtures are those which contain one or more of the preferred component mixtures.

The liquid crystal mixtures according to the invention, which contain one or more compounds of the formula I and in particular of the formulae Ia-Ii, also represent particularly suitable "stable structure mixtures" for application in electrooptical systems, which can in general be optimized by the methods and/or additives described with respect to specific requirements without other parameters of the mixture at the same time undergoing too drastic a change and the utility of the mixture in the electrooptical systems undergoing considerably damaging change.

The liquid crystal mixtures according to the invention are particularly suitable for use in electrooptical systems according to the preamble of Claim 1. Considerable commercial importance is thus ascribed to the liquid crystals according to the invention and to the electrooptical systems according to the invention.

The liquid crystal mixtures according to the invention can be modified by further additives in such a way that they can be used in all electrooptical systems according to the preamble of Claim 1.

Additives of this type are known to the person skilled in the art and are described in detail in the literature. Thus, for example, pleochroitic dyes can be added for the preparation of coloured electrooptical systems or substances can be added to change the dielectric anisotropy, the optical anisotropy, the viscosity and/or the temperature dependence of electrooptical parameters of the liquid crystals. Substances of this type are described, for example, in H. Kelker and R. Hatz, Handbook of Liquid Crystals, Verlag Chemie, Weinheim, 1980 and in DE-OS 2,209,127, 2,240,864, 2,321,632, 2,338,281, 2,450,088, 2,637,430, 2,853,728 and 2,902,177.

Electooptical liquid crystal systems in which pleochroitic dyes are added to the liquid crystal in a per cent by weight range of 0-25%, in particular 0-20% and very particularly 0-15% are preferred.

In addition, chiral mesogenic or, alternatively, non-mesongenic compounds can be added to the liquid crystal mixtures according to the invention to increase the scattering in the opaque state and/or to influence the slope of the electrooptical curve, as is described, for example, in DE 4,007,039. Liquid crystals according to the invention which contain 0-15% and in particular 0-10% of chiral additives are preferred.

The electrooptical liquid crystal systems according to the invention can be switched on by applying a direct or alternating voltage. However, an alternating voltage is preferably used which has an effective alternating voltage amplitude between 1 and 240 volts and an alternating voltage frequency between 10 Hz and 10 kHz. Amplitudes between 2 and 220 volts and frequencies between 20 and 120 Hz are particularly preferred. The amplitude of the alternating voltage is very particularly preferably between 2 and 130 V.

The liquid crystal mixtures which can be used according to the invention are prepared in a manner customary per se. As a rule, the desired amount of the components used in the smaller amount is dissolved in the components making up the main component, expediently at elevated temperature. It is also possible to mix solutions of the components in an organic solvent, for example in acetone, chloroform or methanol, and to remove the solvent again after thorough mixing, for example by distillation.

The following examples are intended to illustrate the invention without limiting it.

The symbols have the following meaning:

K: crystalline solid state,
S: smectic phase (the index characterizes the phase type),
N: nematic phase,
I: isotrope phase.

The number between 2 symbols gives the transition temperature in degrees Celsius.

The percentage data given are percentages by weight.

Example 1

a) An electrooptical liquid crystal system, containing a liquid crystal mixture which consists of the following compounds

11.38 % of p-(trans-4-pentylcyclohexyl)-chlorobenzene
29.51 % of 1-(p-ethylphenyl)-2-(3-fluoro-4-chlorobiphenyl-4'-yl)-ethane
14.76 % of 1-(p-propylphenyl)-2-(3-fluoro-4-chlorobiphenyl-4'-yl)-ethane
23.85 % of 1-(p-pentylphenyl)-2-(3-fluoro-4-chlorobiphenyl-4'-yl)-ethane
9.08 % of 1-(trans-4-propylcyclohexyl)-2-(4-chlorobiphenyl-4'- yl)-ethane
5.74 % of 1-[trans-4-(trans-4-propylcyclohexyl)-cyclohexyl]-2-(3-fluoro-4-chloro-bipheny1-4'-yl)-ethane and
5.68 % of 1-[trans-4-(trans-4-propylcyclohexyl)-cyclohexyl]-2-(4-trifluoromethoxy-2', 6'-difluorobiphenyl-4'-yl)-ethane

and has the following phycical parameters

N→I 85 °C

$n_e$ 1.7193

$n_o$ 1.5231

Δn 0 1962

b) The electrooptical liquid crystal system is prepared by various processes 1.1-1.3 and 2.

1. Microdroplets matrix systems

1.1 The liquid crystal mixture from a) is stirred at room temperature with the adhesive NOA 65 (Norland Products) which can be cured by UV irradiation in the ratio 1.6:1 until a clear solution is obtained, which is put, together with spacers (20 µm), between 2 transparent glass substrates provided with electrode layers. The glass substrates are pressed together whereby a uniform film having a thickness of 20 µm is obtained which is cured by UV irradiation for 1 minute.

1.2 The liquid crystal mixture from a) is stirred at room temperature with Epikote 828 and Capcure 3-800 (Miller Stephenson Company) in the ratio 1:1:1 until a clear solution is obtained; the stirring time is kept as brief as possible, as the solution is already cured after about 1/2 h at room temperature. The solution is put, together with spacers (20 µm), between 2 transparent glass substrates provided with electrode layers, which are pressed together whereby a uniform film having a thickness of 20 µm is obtained. The films can be heated to temperatures up to 100°C in order to accelerate the curing process.

1.3 5 g of the liquid crystal mixture from a) are stirred at 2,000 rpm at room temperature for 2 minutes with 15 g of 20% aqueous PVA solution. The solution obtained is degassed for 24 h and applied in a thin layer, together with spacers (20 µm), to a glass substrate provided with an electrode layer. The arrangement is dried at 85°C for 1 h, prior to applying a second glass substrate provided with an electrode layer, whereby a uniform film having a thickness of 20 µm is obtained. The system thus obtained is dried at 85°C for a further 24 h.

2. Network system

The liquid crystal mixture from a) is stirred with trimethylolpropane triacrylate as a polymerizable compound and 2-hydroxy-2-methyl-1-phenylpropan-1-one (Darocure 1173, commercial product of E. Merck, Darmstadt) as a photoinitiator in the ratio 80 : 19.8 : 0.2 and put between two glass plates provided with electrode layers with addition of spacers having a thickness of 20 µm. In order to cure the polymer, the system obtained was passed through the field of radiation of a halogen lamp (70 W/cm) at a defined rate (3 m/min).

The electrooptical systems prepared according to processes b) 1.1-1.3 and 2 are distinguished by a wide working temperature range, favourable values for the electrooptical parameters and their temperature dependence and in particular by a low threshold voltage.

<u>Example 2</u>

a) An electrooptical liquid crystal system, containing a liquid crystal mixture which consists of the following compounds

14.97 % of 1-(trans-4-propylcyclohexyl)-2-(4-chloro-3,5,2',6'-tetrafluorobiphenyl-4'-yl)-ethane and

85.03 % of the mixture of example 1

and has the following physical parameters:

| | |
|---|---|
| clear point | $T_c$ = 76° C |
| optical anisotropy | $\Delta n$ =0.1843 (20°C, 589 nm) |

b) The electrooptical liquid crystal system is prepared by the processes described in Example 1, 1.1-1.3 and 2.

<u>Example 3</u>

a) An electrooptical liquid crystal system, containing a liquid crystal mixture which consists of the following compounds:

19.90 % of 1-(trans-4-propylcyclohexyl)-2-(4-chloro-3,2'- difluorobiphenyl-4'-yl)-ethane and
80.10 % of the mixture of example 1

clear point 86 °C
optical anisotropy = 0.1917 (20°C, 589 nm)

b) The electrooptical liquid crystal system is prepared by the processes described in Example 1, 1.1-1.3 and 2.

Example 4

a) An electrooptical liquid crystal system, containing a liquid crystal mixture which consists of the following compounds:

19.96 % of 1-(trans-4-pentylcyclohexyl)-2-(4-chloro-3,2',6'-trifluorobiphenyl-4'-yl)-ethane and

80.04 % of the mixture of example 1

and has the following physical parameters:

clear point: 79°C
optical anisotropy: 0.1842

b) The electrooptical liquid crystal system is prepared by the processes described in Example 1b).

Example 5

a) An electrooptical liquid crystal system, containing a liquid crystal mixture which consists of the following compounds:

19.90 % of 1-(trans-4-pentylcyclohexyl)-2-(4-chloro-2',6'-difluorobiphenyl-4'-yl)-ethane and
80.10 % of the mixture of example 1

and has the following physical parameters:

clear point: 85°C
optical anisotropy: 0.1856

b) The electrooptical liquid crystal system is prepared by the processes described in Example 1b).

Example 6

a) An electrooptical liquid crystal system, containing a liquid crystal mixture which consists of the following compounds:

20.2 % of 1-(trans-4-pentylcyclohexyl)-2-(3,4,2',6'-tetrafluoro-biphenyl-4'-yl)-ethane and

79,8% of the mixture of example 1

and has the following physical parameters:

clear point: 74,8 °C
optical anisotropy: 0.1766

b) The electrooptical liquid crystal system is prepared by the processes described n Example 1b).

Example 7

a) An electrooptical liquid crystal system, containing a liquid crystal mixture which consists of the following compounds:

20 % of 1-(trans-4-pentylcyclohexyl)-2-(2', 6'-difluoro-4-trifluoromethoxy-biphenyl-4'-yl) ethane and

80 % of the mixture of example 1

and has the following physical parameters:

| | |
|---|---|
| clear point: | 80.6 °C |
| optical anisotropy: | 0.1826 |

b) The electrooptical liquid crystal system is prepared by the processes described n Example 1b).

Example 8

a) An electrooptical liquid crystal system, containing a liquid crystal mixture which consists of the following compounds:

20.2 % of 1-(trans-4-pentylcyclohexyl)-2-(3,4,2'-trifluoro-biphenyl-4'-yl) ethane and

79.8 % of the mixture of example 1

and has the following physical parameters:

| | |
|---|---|
| clear point: | 80.0 °C |
| optical anisotropy: | 0.1819 |

b) The electrooptical liquid crystal system is prepared by the processes described n Example 1b).

Example 9

a) An electrooptical liquid crystal system, containing a liquid crystal mixture which consists of the following compounds:

10 % of 1-(trans-4-pentylcyclohexyl)-2-(3,4,5,2',6'-pentafluoro-biphenyl-4'-yl) ethane and

90 % of the mixture of example 1

and has the following physical parameters:

| | |
|---|---|
| clear point: | 78 °C |
| optical anisotropy: | 0.1852 |

b) The electrooptical liquid crystal system is prepared by the processes described n Example 1b).

Example 10

a) An electrooptical liquid crystal system, containing a liquid crystal mixture which consists of the following compounds:

19.9 % of 1-(trans-4-pentylcyclohexyl)-2-(2'-fluoro-4-trifluoromethoxy-biphenyl-4'-yl) ethane and

80.1% of the mixture of example 1

and has the following physical parameters:

| | |
|---|---|
| clear point: | 85.3 °C |
| optical anisotropy: | 0.1848 |

b) The electrooptical liquid crystal system is prepared by the processes described n Example 1b).

Example 11

a) An electrooptical liquid crystal system, containing a liquid crystal mixture which consists of the following compounds:

4.9 % of 1-(trans-4-pentylcyclohexyl)-2-(2',6'-difluoro-4-cyano-biphenyl-4'-yl) ethane and

95.1 % of the mixture of example 1

and has the following physical parameters:

| | |
|---|---|
| clear point: | 86.3 °C |
| optical anisotropy: | 0.1954 |

b) The electrooptical liquid crystal system is prepared by the processes described n Example 1b).

Example 12

a) An electrooptical liquid crystal system, containing a liquid crystal mixture which consists of the following compounds:

4.9% of 1-(trans-4-pentylcyclohexyl)-2-(2',6',4-trifluoro-biphenyl-4'-yl) ethane and

95.1% of the mixture of example 1

and has the following physical parameters:

| | |
|---|---|
| clear point: | 83.8 °C |
| optical anisotropy: | 0.1920 |

b) The electrooptical liquid crystal system is prepared by the processes described n Example 1b).

Example 13

a) An electroopticai liquid crystal system, containing a liquid crystal mixture which consists of the following compounds:

10% of 1-(trans-4-pentylcyclohexyl)-2-(2',4-difluoro-biphenyl-4'-yl) ethane and

90% of the mixture of example 1

and has the following physical parameters:

| | |
|---|---|
| clear point: | 87.1 °C |
| optical anisotropy: | 0.1902 |

b) The electrooptical liquid crystal system is prepared by the processes described n Example 1b).

Example 14

a) An electrooptical liquid crystal system, containing a liquid crystal mixture which consists of the following compounds:

21 % of 1-(4-ethyl-2-fluoro-biphenyl-4'-yl)-2-(p-chlorophenyl)-ethane,

10,8 % of 1-(4-propyl-2-fluoro-biphenyl-4'-yl)-2-(p-chlorophenyl)-ethane,

28,2 % of 1-(4-pentyl-2-fluoro-biphenyl-4'-yl)-2-(p-chlorophenyl)-ethane,

5 % of 1-(trans-4-propylcyclohexyl)-2-fluoro-4'-ethylbiphenyl,

10 % of 1-(trans-4-propylcyclohexyl)-3',4'-difluorobiphenyl,

10 % of 1-(trans-4-pentylcyclohexyl)-3',4'-difluorobiphenyl and

15 % of 1-(trans-4-pentylcyclohexyl)-2-(2',6'-difluoro-4-chlorobiphenyl-4'-yl)-ethane

and has the following physical parameters:

| | |
|---|---|
| clear point | 82.2°C |
| optical anisotropy | 0.190 |

b) The electrooptical LC system is prepared by the process described in Example 1.1 (concentration of LC in NOA 65 was 33.75% by weight). In Fig. 1, the relative transmission for this electrooptical system is plotted as a function of the applied voltage (sinusoidal alternating voltage (effective values), frequency 100 Hz). This system is distinguished, in particular, by a good contrast and a low threshold voltage.

## Claims

**1.** Electrooptical liquid crystal system

- which contains a dielectrically positive liquid crystal mixture and a further optically transparent medium between 2 electrodes which are optionally applied to substrate sheets,
- whose liquid crystal molecules in the switched-off state have an irregular orientation,
- in which one of the refractive indices of the liquid crystal mixture essentially agrees with the refractive index of the matrix $n_M$ and/or in which the quotient of the mass of the liquid crystal mixture and of the mass of the optically transparent medium is 1.5 or more,
- which, independently of the polarization of the incident light, has a reduced transmission in one of the two switch states compared to the other state,

characterized in that the liquid crystal mixture contains one or more compounds of the formula I

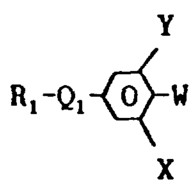

I

in which

$Q^1$ is

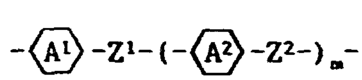

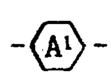 and 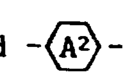

are independently of one another trans-1,4-cyclohexylene, 1,4-phenylene, 2-fluoro-1,4-phenylene, 3-fluoro-1,4-phenylene, 3,5-difluoro-1,4-phenylene and one of $A^1$ and, if present, $A^2$, is also pyridine-2,5-diyl, pyrimidine-2,5-diyl, 1,3-dioxane-2,5-diyl, tetrahydropyran-2,5-diyl or naphthalene-2,6-diyl.

$Z^1$ and $Z^2$ are independently of one another a single bond, $-CH_2CH_2-$, -COO-, -OCO-, -C≡C-, $-CH_2O-$ or any

desired combinations of these bridge groups,

Y and X are independently of one another H or F, and one of X and Y is also Cl,

W is -CN, -Cl, -F, $-CF_3$, $-OCF_3$ or -NCS

$R^1$ is alkyl having 1-12 C atoms, in which one or 2 non-adjacent $CH_2$ groups can also be replaced by -O- or -HC≡CH-, and

m is 0, 1 or 2

with the proviso that at least one of $A^1$ and $A^2$ is 3,5-difluoro-1,4-phenylene.

**2.** System according to claim 1 in which

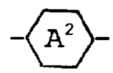

is 3,5-difluoro-1,4-phenylene

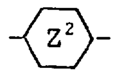

is a single bond or $-CH_2CH_2-$.

**3.** System according to claim 1 or 2 containing one or more compounds selected from the formula Ia

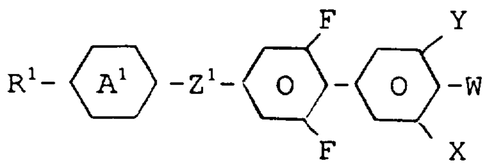

Ia

wherein the symbols have the meaning given in claim 1

**4.** System according to one of the claims 1 to 3 in which W is Cl.

**5.** System according to one of claim 1 - 4, characterized in that the liquid crystal mixture is embedded in the optically transparent medium in the form of compartments which are separated to a greater of lesser extent from one another.

**6.** System accrding to one of claiml - 4, characterized in that the liquid crystal mixture forms a more or less cohenrent, continuous phase in the optically transparent medium.

**7.** System according to claim 5, characterized in that it is a PDLC system.

**8.** System according to claim 5, characterized in that it is an NCAP system.

**9.** System according to claim 6, characterized in that it is a PN system.

**10.** Liquid crystal, characterized in that it is identical to a liquid crystal mixture according to one of claims 1 - 4.

**11.** Use of a liquid crystal mixture according to claim 10 in an electrooptical system.

**12.** System according to one of claim 1 - 4, characterized in that it is addressed by an active matrix.

**Patentansprüche**

**1.** Elektrooptisches Flüssigkristallsystem,

- das eine dielektrisch positive Flüssigkristallmischung und ein weiteres optisch transparentes Medium zwischen 2 Elektroden enthält, die gegebenenfalls auf Substratplatten aufgebracht werden,
- dessen Flüssigkristallmoleküle im ausgeschalteten Zustand eine unregelmäßige Orientierung aufweisen,
- bei dem einer der Brechungsindices der Flüssigkristallmischung im wesentlichen mit dem Brechungsindex der Matrix $n_M$ übereinstimmt und/oder bei dem der Quotient aus der Masse der Flüssigkristallmischung und der Masse des optisch transparenten Mediums 1,5 oder mehr beträgt,
- das unabhängig von der Polarisation des einfallenden Lichts in einem der zwei Schaltzustände eine gegenüber dem anderen Zustand verringerte Durchlässigkeit besitzt,

dadurch gekennzeichnet, daß die Flüssigkristallmischung eine oder mehrere Verbindungen der Formel I

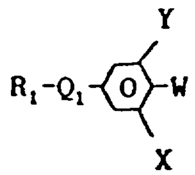

I

enthält, worin

$Q^1$ 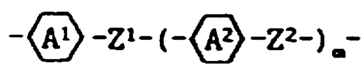

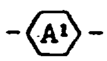 und 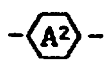

unabhängig voneinander trans-1,4-Cyclohexylen, 1,4-Phenylen, 2-Fluor-1,4-phenylen, 3-Fluor-1,4-phenylen, 3,5-Difluor-1,4-phenylen sowie eines aus der Gruppe $A^1$ und, falls vorhanden, $A^2$ auch Pyridin-2,5-diyl, Pyrimidin-2,5-diyl, 1,3-Dioxan-2,5-diyl, Tetrahydro-pyran-2,5-diyl oder Naphthalin-2,6-diyl,

$Z^1$ und $Z^2$ unabhängig voneinander eine Einfachbindung, $-CH_2CH_2-$, -COO-, -OCO-, -C≡C-, $-CH_2O-$ oder beliebige Kombinationen dieser Brückengruppen,

Y und X unabhängig voneinander H oder F und eines aus der Gruppe X und Y auch Cl,

W -CN, -Cl, -F, $-CF_3$, $-OCF_3$ oder -NCS,

$R^1$ Alkyl mit 1-12 C-Atomen, worin eine oder 2 nichtbenachbarte $CH_2$-Gruppen auch durch -O- oder -HC=CH- ersetzt sein können, und

m 0, 1 oder 2 bedeuten,

mit der Maßgabe, daß mindestens eines aus der Gruppe $A^1$ und $A^2$ 3,5-Difluor-1,4-phenylen bedeutet.

**2.** System nach Anspruch 1, wobei

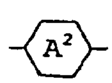

3,5-Difluor-1,4-phenylen und

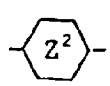

eine Einfachbindung oder $-CH_2CH_2-$ bedeuten.

**3.** System nach Anspruch 1 oder 2, enthaltend eine oder mehrere Verbindungen ausgewählt aus der Formel Ia

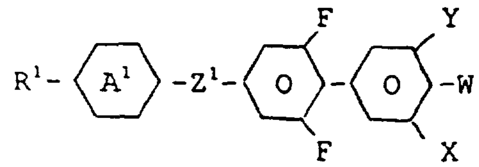

Ia

worin die Symbole die in Anspruch 1 gegebene Bedeutung besitzen.

**4.** System nach einem der Ansprüche 1 bis 3, wobei W Cl bedeutet.

**5.** System nach einem der Ansprüche 1 - 4, dadurch gekennzeichnet, daß die Flüssigkristallmischung in dem optisch transparenten Medium in Form von Tropfen eingebettet ist, die mehr oder weniger stark voneinander getrennt sind.

**6.** System nach einem der Ansprüche 1 - 4, dadurch gekennzeichnet, daß die Flüssigkristallmischung in dem optisch transparenten Medium eine mehr oder weniger kohärente kontinuierliche Phase bildet.

**7.** System nach Anspruch 5, dadurch gekennzeichnet, daß es sich um ein PDLC-System handelt.

**8.** System nach Anspruch 5, dadurch gekennzeichnet, daß es sich um ein NCAP-System handelt.

**9.** System nach Anspruch 6, dadurch gekennzeichnet, daß es sich um ein PN-System handelt.

**10.** Flüssigkristalle, dadurch gekennzeichnet, daß sie mit einer Flüssigkristallmischung nach einem der Ansprüche 1 - 4 identisch sind.

**11.** Verwendung einer Flüssigkristallmischung nach Anspruch 10 in einem elektrooptischen System.

**12.** System nach einem der Ansprüche 1 - 4, dadurch gekennzeichnet, daß es mittels einer aktiven Matrix adressiert wird.

**Revendications**

**1.** Système électrooptique de cristaux liquides

- qui renferme un mélange diélectriquement positif de cristaux liquides et un autre milieu optiquement transparent entre deux électrodes qui sont, le cas échéant, appliquées sur des feuilles substrat,
- dont les molécules de cristaux liquide, à l'état de repos, présentent une orientation irrégulière;
- dans lequel un des indices de réfraction du mélange de cristaux liquides correspond pratiquement à l'indice de réfraction de la matrice $n_M$ et/ou dans lequel le quotient de la masse de mélange de cristaux liquides et de la masse du milieu optiquement actif est de 1,5 ou plus.
- qui, indépendamment de la polarisation de la lumière incidente, présente une transmission réduite dans un des deux états de commutation par comparaison avec l'autre état,

caractérisé en ce que le mélange de cristaux liquide contient un ou plus d'un composé de la formule I.

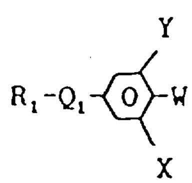

I

dans laquelle

$Q_1$ est

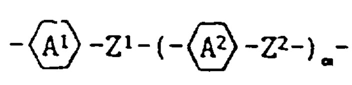

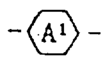 et 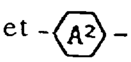

représentent, indépendamment l'un de l'autre, du trans-1,4-cyclohexylène, du 1,4-phénylène, du 2-fluoro-1,4-phénylène, du 3-fluoro-1,4-phénylène, du 3,5-difluoro-1,4-phénylène et un des $A^1$ et, s'il existe, $A^2$ est également du pyridine-2,5-diyle, du pyrimidine-2,5-diyle, du 1,3-dixoane-2,5-diyle, du tétrahydropyran-2,5-diyle ou du naphthalène-2,6-diyle.

$Z^1$ et $Z^2$ représentent, idépendamment l'un de l'autre, une simple liaison, $-CH_2CH_2$, -COO-, -OCO-, -C≡C-, $-CH_2O-$ ou des combinaisons quelconques souhaitées de ces groupes de pontage,

Y et X représentent indépendamment l'un de l'autre H ou F et un des X et Y est également Cl,

W est -CN, -Cl, $F_2$-$CF_3$, $-OCF_3$ ou -NCS, ,

$R^1$ est un alkyle ayant de 1 à 12 atomes de carbone, dans lequel un ou deux parmi les groupes non-adjacent $CH_2$ peuvent être également remplacé par -O- ou -HC=CH-, et

m est 0, 1 ou 2

sous la condition qu'au moins un des $A^1$ et $A^2$ soit du 3,5-difluoro-1,4-phénylène.

**2.** Système selon la revendication 1, dans laquelle

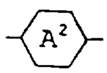

est du 3,5-difluoro-1,4-phénylène

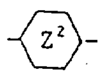

est une simple liaison ou $-CH_2CH_2-$

**3.** Système selon la revendication 1 ou 2, qui renferme un ou plus d'un composé choisi parmi la formule Ia

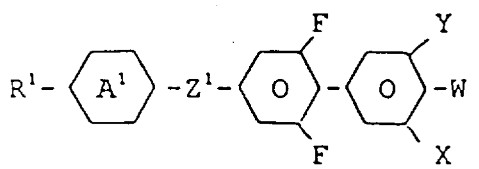 Ia

dans laquelle les symboles ont la signification spécifiée dans la revendication 1.

**4.** Système selon l'une des revendications 1 à 3, dans lequel W est Cl.

**5.** Système selon l'une des revendications 1 à 4, caractérisé en ce que le mélange de cristaux liquides est inclus dans le milieu optiquement transparent sous la forme de compartiments qui sont séparés dans une mesure plus ou moins importante les uns des autres.

**6.** Système selon l'une des revendications 1 à 4, caractérisé en ce que le mélange de cristaux liquides forme une phase continue plus ou moins cohérente dans le milieu optiquement transparent.

**7.** Système selon la revendication 5, caractérisé en ce quc c'est un système PDLC (polymer dispersed liquid crystals)

**8.** Système selon la revendication 5, caractérisé en ce que c'est un système NCAP (curvilinear aligned phases)

**9.** Système selon la revendication 6, caractérisé en ce que c'est un système PN (polymer network)

**10.** Cristal liquide, caractérisé en ce qu'il est identique à un mélange de cristaux liquides selon l'une des revendications 1 à 4.

**11.** Utilisation d'un mélange de cristaux liquides selon la revendication 10, dans un système électro-optique.

**12.** Système selon l'une des revendications 1 à 4, caractérisé en ce qu'il est mis en adresse par une matrice active.

Fig. 1

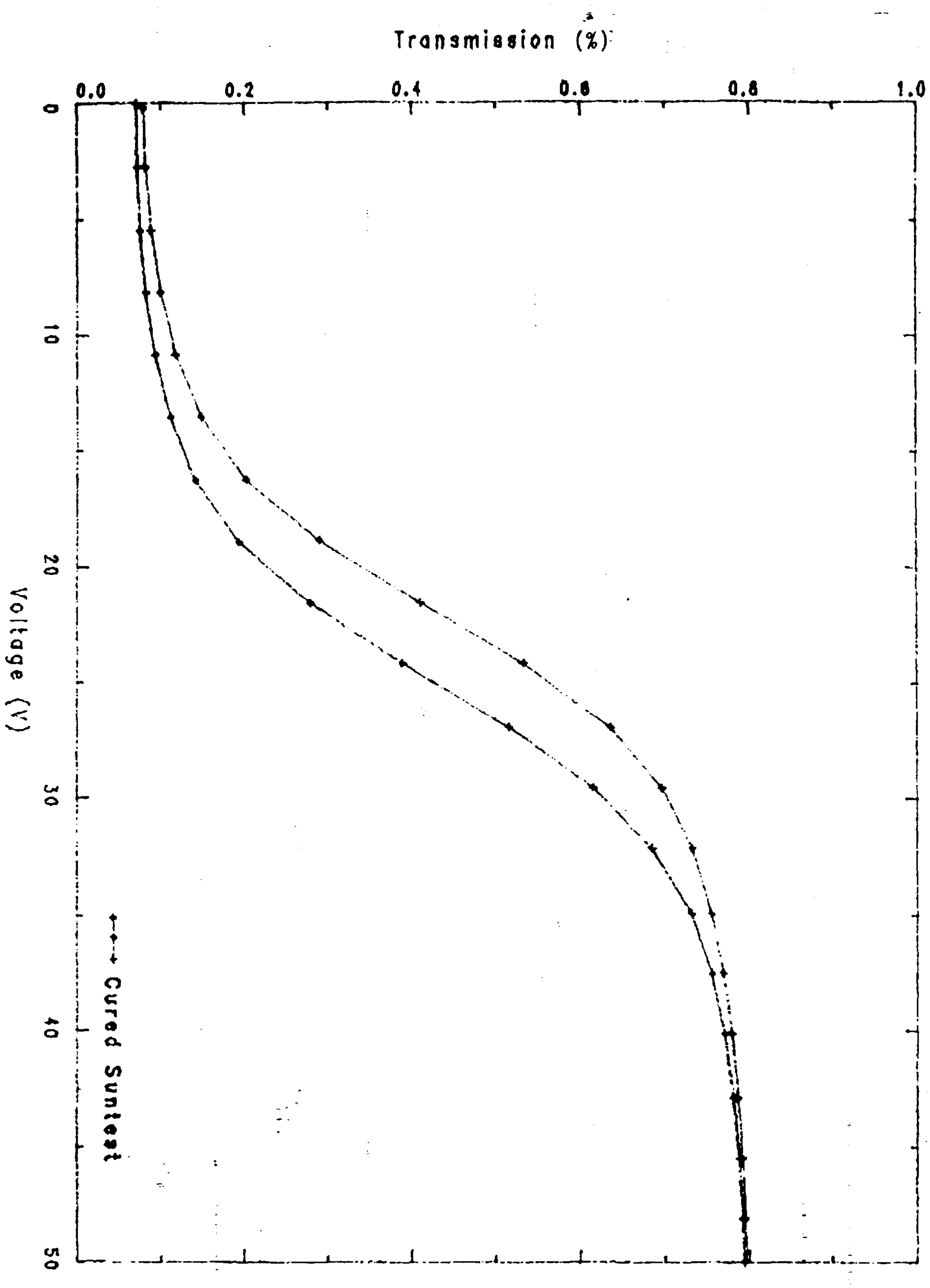
Transmission (%)
0.0
0.2
0.4
0.6
0.8
1.0
Voltage (V)
0
10
20
30
40
50
Cured Suntest